(19) Europäisches Patentamt
European Patent Office
Office européen des brevets

(11) EP 4 005 771 B1

(12) EUROPEAN PATENT SPECIFICATION

(45) Date of publication and mention of the grant of the patent:
**23.04.2025 Bulletin 2025/17**

(21) Application number: **20844037.0**

(22) Date of filing: **01.07.2020**

(51) International Patent Classification (IPC):
***B32B 27/08*** *(2006.01)* ***B32B 27/30*** *(2006.01)*
*B29C 51/14* *(2006.01)* *B29C 53/04* *(2006.01)*

(52) Cooperative Patent Classification (CPC):
**B29C 51/002; B29C 53/005; B32B 27/08; B32B 27/302; B32B 27/308; B32B 27/365;**
B29C 51/10; B29C 51/14; B29C 53/04; B29K 2035/00; B29L 2031/3008; B29L 2031/3481; B32B 2250/24; B32B 2255/10; B32B 2255/26;
(Cont.)

(86) International application number:
**PCT/JP2020/025922**

(87) International publication number:
**WO 2021/014915 (28.01.2021 Gazette 2021/04)**

(54) **TRANSPARENT RESIN MULTILAYER BODY, AND TRANSPARENT SUBSTRATE MATERIAL AND TRANSPARENT PROTECTIVE MATERIAL EACH USING SAME**

TRANSPARENTER HARZMEHRSCHICHTKÖRPER SOWIE EIN TRANSPARENTES SUBSTRATMATERIAL UND EIN TRANSPARENTES SCHUTZMATERIAL DAMIT

CORPS MULTICOUCHE EN RÉSINE TRANSPARENTE, ET MATÉRIAU DE SUBSTRAT TRANSPARENT ET MATÉRIAU PROTECTEUR TRANSPARENT L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2019 JP 2019137006**
**20.08.2019 JP 2019150098**

(43) Date of publication of application:
**01.06.2022 Bulletin 2022/22**

(73) Proprietors:
- **MITSUBISHI GAS CHEMICAL COMPANY, INC.**
**Chiyoda-ku**
**Tokyo 100-8324 (JP)**
- **MGC Filsheet Co., Ltd.**
**Tokorozawa-shi, Saitama 359-1164 (JP)**

(72) Inventor: **HIRABAYASHI Masaki**
**Toyonaka-shi, Osaka 561-0823 (JP)**

(74) Representative: **Hoffmann Eitle**
**Patent- und Rechtsanwälte PartmbB**
**Arabellastraße 30**
**81925 München (DE)**

(56) References cited:
**WO-A1-2014/050136**
**WO-A1-2016/042727**
**JP-A- 2000 153 535**
**JP-A- 2002 516 620**
**JP-A- 2008 049 623**
**JP-A- 2008 238 618**
**JP-A- 2009 196 153**
**JP-A- 2010 125 645**
**JP-A- 2012 192 704**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/30; B32B 2307/412; B32B 2307/414; B32B 2307/418; B32B 2307/536; B32B 2307/732; B32B 2307/738; B32B 2457/208; B32B 2571/00

## Description

### TECHNICAL FIELD

The present invention relates to a resin layered body used for a transparent substrate material and/or protective material. The present invention relates more specifically to a resin layered body having excellent low-temperature thermoformability and favorable appearance so that interference fringes can be prevented from occurring.

### BACKGROUND ART

Acrylic resins excel in, for instance, surface hardness, transparency, scratch resistance, and weather resistance. Meanwhile, polycarbonate resins excel in, for instance, impact resistance. In view of this, layered bodies having an acrylic resin layer(s) and a polycarbonate resin layer(s) excel in, for instance, surface hardness, transparency, scratch resistance, weather resistance, and impact resistance. Thus, the layered bodies have been used for automobile parts, home appliances, electronic devices, and display windows of portable information terminals.

In recent years, design needs have been diversified. Accordingly, there are increasing needs for products, such as front plates of display devices, with designability enhanced by thermoforming such as vacuum forming or pressure forming. Layered bodies having an acrylic resin layer(s) and a polycarbonate resin layer(s) have been attempted to be applied to the front plates in view of the above-described excellent performance. A layered body having an acrylic resin layer and a polycarbonate resin layer may be thermally formed. In this case, however, a sheet has to be heated to a temperature at which the polycarbonate resin expands sufficiently. This gives the acrylic resin excessive heat. Consequently, detachment may occur at the interface between the acrylic resin layer and the polycarbonate resin layer. As a result, the surface may be whitened and/or cracking may occur. Meanwhile, if the molding temperature is lowered to prevent occurrence of whitening/cracking, this may cause what is called "spring back", a phenomenon that the shape of a mold is not reproduced.

Patent Document 1 discloses, as a molding-use resin sheet suitable for thermoforming such as vacuum forming or pressure forming, a molding-use resin sheet comprising an acrylic resin and a polycarbonate resin having a specific terminal group. In such a resin sheet, occurrence of whitening/cracking is prevented during bending in thermoforming. However, when a surface of the acrylic resin layer of such a resin sheet is subjected to hard coating, cracking occurs during bending in thermoforming. This is a problem.

WO 2016/042727 A1 relates to a method for producing an extruded resin plate in which a layer containing a methacrylic resin is laminated on at least one side of a layer containing a polycarbonate, wherein the layer containing a methacrylic resin and the layer containing a polycarbonate have a specific difference in the linear expansion coefficients, and the glass transition temperature of the layer containing the methacrylic resin is 120 to 160 °C.

### PRIOR ART DOCUMENTS

### PATENT DOCUMENTS

Patent Document 1: International Publication No. WO 2016/060100

### SUMMARY OF THE INVENTION

### PROBLEMS TO BE SOLVED BY THE INVENTION

The present invention addresses the problem of providing a resin layered body having excellent low-temperature thermoformability and favorable appearance so that interference fringes can be prevented from occurring.

### MEANS FOR SOLVING THE PROBLEMS

The present inventors have conducted intensive research to solve the above problem. As a result, the invention has been completed. Specifically, the invention is as defined in the appended claims.

### ADVANTAGEOUS EFFECT OF THE INVENTION

The invention provides a resin layered body allowing for molding of a thermoformed product having excellent low-temperature thermoformability and reduced occurrence of interference fringes. Specifically, in a resin layered body of the invention, occurrence of whitening/cracking is prevented during thermoforming. Thus, a molded product having favorable

appearance can be obtained.

The resin layered body may be used as a transparent substrate material and/or a transparent protective material. Specific examples of preferable use include front plates to protect the following devices such as portable display devices (e.g., mobile phone terminals, portable electronic game devices, portable information terminals, mobile PCs) or installed display devices (e.g., note-type PC or desk-top PC liquid crystal monitors, car navigation liquid crystal monitors, liquid crystal TVs).

EMBODIMENTS FOR CARRYING OUT THE INVENTION

Hereinafter, the invention will be described in detail with reference to Production Examples, Examples, and others. However, the invention is not limited to the exemplified Production Examples, Examples, and others. The invention may be changed and implemented by any method as long as not departing from the scope of the appended claims.

<Polycarbonate-Based Resin (A)>

The polycarbonate-based resin (A) used in the invention is a polycarbonate-based resin (A) comprising, as a main component, a polycarbonate resin. As used herein, the wording "comprising, as a main component, a polycarbonate resin" means that the content of the polycarbonate resin is more than 50 mass%. The polycarbonate-based resin (A) preferably contains 75 mass% or more of polycarbonate resin, more preferably contains 90 mass% or more of polycarbonate resin, and still more preferably consists essentially of polycarbonate resin. The polycarbonate-based resin (A) has a molecular main chain containing a carboxylic acid ester bond. That is, the polycarbonate-based resin (A) is not particularly limited if -[O-R-OCO]-unit (where R represents an aliphatic group, an aromatic group, or a moiety containing both an aliphatic group and an aromatic group, or those further having a linear structure or a branched structure) is included. It is particularly preferable to use a polycarbonate containing a structural unit represented by formula (2) below. Such a polycarbonate may be used to produce a resin layered body having excellent impact resistance.

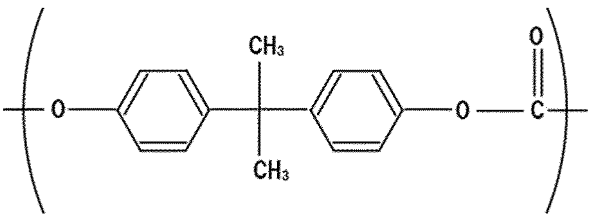
(2)

The polycarbonate-based resin (A) is preferably synthesized using, as a terminating agent, a monovalent phenol represented by the following general formula (1):

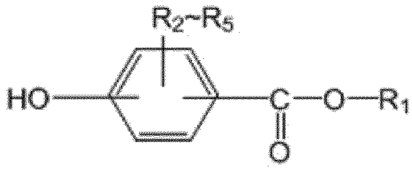
(1)

wherein $R_1$ represents a $C_{8-36}$ alkyl group or a $C_{8-36}$ alkenyl group; and
$R_2$ to $R_5$ each represent hydrogen, halogen, or an optionally substituted $C_{1-20}$ alkyl or $C_{6-12}$ aryl group where the substituent is halogen, a $C_{1-20}$ alkyl group, or a $C_{6-12}$ aryl group.

The monovalent phenol represented by general formula (1) is more preferably a monovalent phenol represented by the following general formula (3):

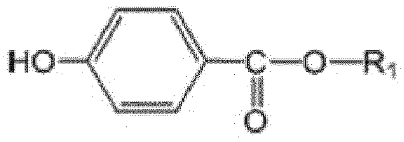
(3)

wherein $R_1$ represents a $C_{8-36}$ alkyl group or a $C_{8-36}$ alkenyl group.

The number of carbon atoms of $R_1$ in general formula (1) or (3) is more preferably within a specific numerical range. Specifically, the upper limit of the number of carbon atoms of $R_1$ is preferably 36, more preferably 22, and particularly preferably 18. In addition, the lower limit of the number of carbon atoms of $R_1$ is preferably 8 and more preferably 12.

It is particularly preferable to use, as a terminating agent, any or both of parahydroxy benzoic acid hexadecyl ester or parahydroxy benzoic acid 2-hexyldecyl ester among monovalent phenol compounds (terminating agents) represented by general formula (1) or (3).

A monovalent phenol (terminating agent) containing, for instance, a $C_{16}$ alkyl group may be used as $R_1$ in general formula (1) or (3). This case excels in the glass-transition temperature, the melt fluidity, the moldability, the draw-down resistance, and the solvent solubility of the monovalent phenol during polycarbonate resin production. This monovalent phenol is particularly preferable as a terminating agent used for the polycarbonate resin of the present invention.

On the other hand, the number of carbon atoms of $R_1$ in general formula (1) or (3) may be increased too much. In this case, the solubility of the monovalent phenol (terminating agent) in an organic solvent is likely to decrease. This may cause a decrease in productivity during polycarbonate resin production.

For example, if the number of carbon atoms of $R_1$ is 36 or less, the productivity during polycarbonate resin production is high and the cost performance is favorable. If the number of carbon atoms of $R_1$ is 22 or less, the monovalent phenol has particularly superior solubility in an organic solvent. Thus, the productivity during polycarbonate resin production can be markedly high and the cost performance is also improved.

If the number of carbon atoms of $R_1$ in general formula (1) or (3) is too small, the glass-transition temperature of the polycarbonate resin is not sufficiently low. This may cause a decrease in thermoformability.

Another resin contained in the polycarbonate-based resin (A) includes a polyester-based resin. The polyester-based resin may be allowed if terephthalic acid is primarily included as a dicarboxylic acid component, and optionally comprises a dicarboxylic acid component other than terephthalic acid. Preferable examples include what is called "PETG", a polyester-based resin produced by poly-condensing a dicarboxylic acid component and a glycol component in which 80 to 60 parts (molar ratio) of main component ethylene glycol and 20 to 40 parts (molar ratio) of 1,4-cyclohexane dimethanol (the total of 100 parts) are included. In addition, the polycarbonate-based resin (A) optionally comprises a polyester polycarbonate-based resin having an ester bond and a carbonate bond in the polymer backbone.

As used herein, the weight-average molecular weight of the polycarbonate-based resin (A) affects the impact resistance and the molding conditions of a resin layered body. That is, the case where the weight-average molecular weight is too small is not preferable because of a decrease in the impact resistance of a resin layered body. The case where the weight-average molecular weight is too high is not preferable because an excessive heat source may be required when the layer containing a polycarbonate-based resin (A) is layered. In addition, some molding processes need a high temperature, so that the polycarbonate-based resin (A) is subjected to the high temperature. This may cause a harmful effect on the thermostability. The polycarbonate-based resin (A) has a weight-average molecular weight of preferably from 10,000 to 75,000, more preferably from 15,000 to 60,000, and still more preferably from 20,000 to 50,000.

<How to Measure Weight-Average Molecular Weight of Polycarbonate-Based Resin (A)>

The weight-average molecular weight of the polycarbonate-based resin (A) may be measured based on the disclosure in paragraphs 0061 to 0064 of JP-A-2007-179018. The measurement protocol is detailed below.

[Table 1]

| Table 1: Weight-average molecular weight measurement conditions. | |
|---|---|
| Instrument: | "Aliance", manufactured by Waters, Inc. |
| Columns: | "Shodex K-805L" (two columns), manufactured by Showa Denko K.K. |
| Detector: | UV detector: 254 nm |
| Eluent: | chloroform. |

Polystyrene (PS) is used as a standard polymer and the measurement is performed. Next, the correlation between the elution time and the molecular weight of polycarbonate (PC) is determined by a universal calibration method to draw a standard curve. Then, the PC elution curve (chromatogram) is determined under the same conditions as in the case of the standard curve to calculate each average molecular weight from the elution time (molecular weight) and the peak area (the number of molecules) of the elution time. When the number of molecules with a molecular weight of Mi is Ni, the weight-average molecular weight is expressed as follows. Meanwhile, the formula below is used as the conversion

formula.

(Weight-average molecular weight)

$$Mw = \Sigma(NiMi^2) / \Sigma(NiMi).$$

(Conversion formula)

$$MPC = 0.47822; MPS = 1.01470.$$

Note that MPC represents the molecular weight of PC and MPS represents the molecular weight of PS.

The polycarbonate-based resin (A) used in the invention has a glass-transition temperature of preferably 115 °C or higher and less than 130°C. To make better thermoformability of the resin layered body, in particular, the upper limit of the glass-transition temperature is less than 130°C, for instance, 129°C or 128°C. Note that as used herein, the glass-transition temperature of the polycarbonate-based resin (A) refers to a temperature at which a baseline and a tangential line at an inflection point intersect as calculated and measured using a differential scanning calorimeter at a programming rate of 10°C/min.

The melt flow rate of the polycarbonate-based resin (A) is preferably in the range of from 1 to 30 g/10 min, more preferably in the range of from 8 to 20 g/10 min, and still more preferably in the range of from 11 to 15 g/10 min. If the melt flow rate is in the range of from 1 to 30 g/10 min, the stability during hot melt molding is favorable. Note that as used herein, the melt flow rate of the polycarbonate-based resin (A) is measured using a melt indexer under conditions at a temperature of 300°C and a load of 1.2 kg.

The process for producing the polycarbonate-based resin (A) used in the invention may be selected, if appropriate, from a known phosgene process (interface polymerization process), an ester exchange process (melt process), or other processes depending on a monomer used.

<Thermoplastic Resin (B)>

The thermoplastic resin (B) used in the invention comprises a methacrylic resin (C) and a styrene copolymer (D). In order to make compatibility better, it is particularly preferable that the thermoplastic resin (B) consists of a methacrylic resin (C) and a styrene copolymer (D). Each constituent component will be described below.

<Methacrylic Resin (C)>

Examples of the methacrylic resin (C) contained in the thermoplastic resin (B) in the invention include a structural unit derived from a methacrylic acid ester monomer.

Examples of the methacrylic acid ester monomer of the methacrylic resin (C) include: an alkyl methacrylate (e.g., methyl methacrylate, ethyl methacrylate, n-propyl methacrylate, isopropyl methacrylate, n-butyl methacrylate, isobutyl methacrylate, tert-butyl methacrylate, pentyl methacrylate, hexyl methacrylate, heptyl methacrylate, 2-ethylhexyl methacrylate, nonyl methacrylate, decyl methacrylate, dodecyl methacrylate); a cycloalkyl methacrylate (e.g., 1-methylcyclopentyl methacrylate, cyclohexyl methacrylate, cycloheptyl methacrylate, cyclooctyl methacrylate, tricyclo[5.2.1.02,6] deca-8-yl methacrylate); an aryl methacrylate (e.g., phenyl methacrylate); or an aralkyl methacrylate (e.g., benzyl methacrylate). From the viewpoint of availability, preferred is methyl methacrylate, ethyl methacrylate, n-propyl methacrylate, isopropyl methacrylate, n-butyl methacrylate, isobutyl methacrylate, or tert-butyl methacrylate. Methyl methacrylate is most preferable.

Additionally, from the viewpoint of heat resistance, the above methacrylic resin contains an MMA-derived structural unit in an amount of preferably 80 mass% or higher, more preferably 90 mass% or higher, and still more preferably 95 mass% or higher.

Further, the methacrylic resin (C) optionally comprises a structural unit derived from an additional monomer other than a methacrylic acid ester. Examples of such an additional monomer include: an acrylic acid ester such as methyl acrylate, ethyl acrylate, n-propyl acrylate, isopropyl acrylate, n-butyl acrylate, isobutyl acrylate, *tert*-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, or 3-dimethylaminoethyl acrylate. From the viewpoint of availability, preferred is an acrylic acid ester such as methyl acrylate, ethyl acrylate, n-propyl acrylate, isopropyl acrylate, n-butyl

acrylate, isobutyl acrylate, tert-butyl acrylate. Methyl acrylate or ethyl acrylate is more preferable. Methyl acrylate is most preferable. The total content of the structural unit derived from the additional monomer in the methacrylic resin (C) is preferably 20 mass% or less, more preferably 10 mass% or less, and still more preferably 5 mass% or less in total.

In the methacrylic resin (C), the lower limit of triad syndiotacticity (rr) is preferably 50 mol% or higher, more preferably 51 mol% or higher, and still more preferably 52 mol% or higher. If the lower limit of the content of such a structure is 50 mol% or higher, the heat resistance is excellent.

As used herein, the triad syndiotacticity (rr) (hereinafter, simply sometimes referred to as "syndiotacticity (rr)") refers to a percentage where two chains (diads) of three contiguous structural units-containing chain (triad) are both a racemo type (referred to as "rr"). Note that if structural unit chains (diads) in a polymer molecule have the same conformation, the conformation is called meso; and if the conformations are oriented in opposition, the conformations are called racemo, which are denoted by m and r, respectively.

First, a $^1$H-NMR spectrum in deuterated chloroform at 30°C is measured. From this spectrum, the area (X) of region from 0.6 to 0.95 ppm and the area (Y) of region from 0.6 to 1.35 ppm while the peak of tetramethyl silane (TMS) is set to 0 ppm, are then measured. After that, the syndiotacticity (rr) (%) of the methacrylic resin (C) can be calculated by the formula: $(X/Y) \times 100$.

The weight-average molecular weight of the methacrylic resin (C) is determined depending on how easily the styrene copolymer (D) is mixed (dispersed) therewith and how easily the thermoplastic resin (B) is produced. That is, if the weight-average molecular weight of the methacrylic resin (C) is too large, the difference in melt viscosity from the styrene copolymer (D) become too large. This may cause problems such as deteriorated transparency of the thermoplastic resin (B) due to poor mixing (dispersion) of both or discontinued stable melt kneading. On the other hand, if the weight-average molecular weight of the methacrylic resin (C) is too small, the strength of the thermoplastic resin (B) decreases. This can cause problems such as a decrease in impact resistance of the resin layered body. The methacrylic resin (C) has a weight-average molecular weight of preferably from 50,000 to 700,000, more preferably from 60,000 to 500,000, and still more preferably from 70,000 to 200,000. The above weight-average molecular weight is a weight-average molecular weight measured by gel permeation chromatography (GPC) in terms of standard polystyrene.

The methacrylic resin (C) has a glass-transition temperature of preferably 100°C or higher, more preferably 105°C or higher, and still more preferably 108°C or higher. If such a glass-transition temperature is 100°C or higher, deformation or cracking hardly occurs when a layered body provided in the invention is under heating conditions. Note that as used herein, the glass-transition temperature of the methacrylic resin (C) refers to a temperature at which a baseline and a tangential line at an inflection point intersect as calculated and measured using a differential scanning calorimeter at a programming rate of 10°C/min.

The methacrylic resin (C) has a melt flow rate of preferably from 1 to 10 g/10 min. The lower limit of such a melt flow rate is more preferably 1.2 g/10 min or higher and still more preferably 1.5 g/10 min or higher. In addition, the upper limit of such a melt flow rate is more preferably 7.0 g/10 min or lower and still more preferably 4.0 g/10 min or lower. If the melt flow rate is in the range of from 1 to 10 g/10 min, the stability during hot melt molding is favorable. Note that as used herein, the melt flow rate of the methacrylic resin (C) is a value measured using a melt indexer at a temperature of 230°C and a load of 3.8 kg.

<Styrene Copolymer (D)>

The styrene copolymer (D) contained in the thermoplastic resin (B) in the invention consists of a vinyl aromatic monomer unit (d1), which is styrene, and a cyclic acid anhydride monomer unit (d2), which is maleic anhydride.

The vinyl aromatic monomer unit (d1) of the styrene copolymer (D) is styrene from the viewpoint of compatibility.

The cyclic acid anhydride monomer unit (d2) of the styrene copolymer (D) is, from the viewpoint of compatibility with an acrylic resin, maleic anhydride.

The percentage of the vinyl aromatic monomer unit (d1) based on the total of all the monomer units in the styrene copolymer (D) is from 68 to 84 mass%, preferably from 70 to 82 mass%, more preferably from 74 to 80 mass%, and still more preferably from 76 to 79 mass%. The percentage of the cyclic acid anhydride monomer unit (d2) based on the total of all the monomer units in the styrene copolymer (D) is from 16 to 32 mass%, preferably from 18 to 30 mass%, more preferably from 20 to 26 mass%, and still more preferably from 21 to 24 mass%.

If the percentage of the vinyl aromatic monomer unit (d1) based on the total of all the monomer units in the styrene copolymer (D) is out of the range of from 68 to 84 mass%, the compatibility with the methacrylic resin (C) is poor. In addition, if the percentage of the cyclic acid anhydride monomer unit (d2) based on the total of all the monomer units in the styrene copolymer (D) is out of the range of from 16 to 32 mass%, the compatibility with the methacrylic resin (C) is poor.

The weight-average molecular weight of the styrene copolymer (D) is not particularly limited, and is, from the viewpoint of compatibility with the methacrylic resin (C), preferably from 30,000 to 400,000, more preferably from 40,000 to 300,000, and particularly preferably from 50,000 to 200,000. The above weight-average molecular weight is a weight-average molecular weight measured by gel permeation chromatography (GPC) in terms of standard polystyrene.

The styrene copolymer (D) has a glass-transition temperature preferably in the range of from 120 to 190°C and more preferably in the range of from 130 to 170°C. If the glass-transition temperature is 120°C or higher, deformation or cracking hardly occurs when a layered body provided in the invention is under heating conditions. Further, because the temperature is 190°C or lower, the processability is superior, including continuous heat shaping using a mirror surface roll or a shaping roll or batch heat shaping using a mirror surface mold or a shaping mold. Note that as used herein, the glass-transition temperature of the styrene copolymer (D) refers to a temperature at which a baseline and a tangential line at an inflection point intersect as calculated and measured using a differential scanning calorimeter at a programming rate of 10°C/min.

The melt flow rate of the styrene copolymer (D) is preferably in the range of from 1 to 10 g/10 min, more preferably in the range of from 4 to 9 g/10 min, and still more preferably in the range of from 6 to 8 g/10 min. If the melt flow rate is in the range of from 1 to 10 g/10 min, the stability during hot melt molding is favorable. Note that as used herein, the melt flow rate of the styrene copolymer (D) in the invention is a value measured using a melt indexer at a temperature of 230°C and a load of 3.8 kg.

The process for producing the styrene copolymer (D) is not particularly limited, and may be selected, if appropriate, from a known process such as solution polymerization, bulk polymerization, or suspension polymerization.

The styrene copolymer (D) is a two-component or multi-component copolymer comprising the vinyl aromatic monomer unit (d1) and the cyclic acid anhydride monomer unit (d2). Here, the methacrylic resin (C) may be used in combination to give a resin layered body higher hardness than in the case of using only the styrene copolymer (D) and better thermoformability than in the case of using only the methacrylic resin (C).

The mass ratio between the methacrylic resin (C) and the styrene copolymer (D) in the invention is such that the methacrylic resin (C) is from 15 to 60 parts by mass while the styrene copolymer (D) is from 85 to 40 parts by mass based on 100 parts by mass of the total content of the methacrylic resin (C) and the styrene copolymer (D). Preferably, the methacrylic resin (C) is from 20 to 55 parts by mass while the styrene copolymer (D) is from 80 to 45 parts by mass. If the mass ratio is within the ranges, the thermoplastic resin (B) can have excellent heat resistance, a high refractive index, and favorable appearance while the transparency is maintained.

The thermoplastic resin (B) has a glass-transition temperature preferably in the range of from 120 to 165°C and more preferably in the range of from 120 to 155°C. If the glass-transition temperature is 120°C or higher, deformation or cracking hardly occurs when a layered body provided in the invention is under heating conditions. Further, because the temperature is 165°C or lower, the processability is superior, including continuous heat shaping using a mirror surface roll or a shaping roll or batch heat shaping using a mirror surface mold or a shaping mold. Note that as used herein, the glass-transition temperature of the thermoplastic resin (B) refers to a temperature at which a baseline and a tangential line at an inflection point intersect as calculated and measured using a differential scanning calorimeter at a programming rate of 10°C/min.

The melt flow rate of the thermoplastic resin (B) is preferably in the range of from 1 to 10 g/10 min, more preferably in the range of from 1.5 to 7 g/10 min, and still more preferably in the range of from 2 to 5 g/10 min. If the melt flow rate is in the range of from 1 to 10 g/10 min, the stability during hot melt molding is favorable. Note that as used herein, the melt flow rate of the thermoplastic resin (B) is a value measured using a melt indexer at a temperature of 230°C and a load of 3.8 kg.

The process for producing the thermoplastic resin (B) in the invention is not particularly limited, and the following known procedure is applicable. Necessary components may be mixed, in advance, using a mixer such as a tumbler, Henschel mixer, or super mixer, and then melt-kneaded with a machine such as a banbury mixer, roller, brabender, single-screw extruder, twin-screw extruder, or pressurized kneader.

The thermoplastic resin (B) used in the invention is characterized in that the glass-transition temperature is relatively high. The temperature is preferably in the range of from 115 to 170°C, more preferably in the range of from 120 to 160°C, and still more preferably in the range of from 125 to 150°C. The thermoplastic resin (B) used in the invention has a relatively high glass-transition temperature. Thus, the difference from the glass-transition temperature of the polycarbonate-based resin (A) is small. This gives an advantage of less problems where when the temperature is made closer to the glass-transition temperature of the polycarbonate-based resin (A) during hot press forming and/or heat bending, poor appearance occurs on the layer containing the thermoplastic resin (B). The difference between the glass-transition temperature of the polycarbonate-based resin (A) and the glass-transition temperature of the thermoplastic resin (B) is in the range of from 0 to 15°C and preferably in the range of from 0 to 10°C.

<Hard Coating Layer>

An additional layer may be present between the hard coating layer and the layer containing the thermoplastic resin (B) in the invention. Preferably, the hard coating layer is layered on a surface or both surfaces of the layer containing the thermoplastic resin (B). The hard coating layer is made of an acrylic hard coating. As used herein, the term "acrylic hard coating" means a coating film in which a monomer or oligomer or prepolymer containing, as a polymerization group, a (meth)acryloyl group is polymerized to form a cross-linked structure. The composition of the acrylic hard coating preferably

comprises a (meth)acrylic monomer in an amount of from 2 to 98 mass%, a (meth)acrylic oligomer in an amount of from 2 to 98 mass%, and a surface modifier in an amount of from 0 to 15 mass%. It is preferable to further include 0.001 to 7 parts by mass of a photopolymerization initiator based on 100 parts by mass of the total of the (meth)acrylic monomer, the (meth) acrylic oligomer, and the surface modifier.

The hard coat layer more preferably comprises 5 to 50% by mass of the (meth)acrylic monomer, 50 to 95% by mass of the (meth)acrylic oligomer and 1 to 10% by mass of the surface modifying agent, and particularly preferably comprises 20 to 40% by mass of the (meth)acrylic monomer, 60 to 80% by mass of the (meth)acrylic oligomer and 2 to 5% by mass of the surface modifying agent.

The amount of the photopolymerization initiator is more preferably 0.01 to 5 parts by mass, and particularly preferably 0.1 to 3 parts by mass relative to 100 parts by mass of the total of the (meth)acrylic monomer, the (meth)acrylic oligomer and the surface modifying agent.

As the (meth)acrylic monomer, those in which a (meth)acryloyl group as a functional group exits in the molecule can be used. The (meth)acrylic monomer may be a monofunctional monomer or a difunctional monomer or a trifunctional or higher monomer.

Examples of the monofunctional monomer include (meth)acrylic acid and (meth)acrylic acid ester. Specific examples of difunctional and/or trifunctional or higher (meth)acrylic monomers include diethylene glycol di(meth)acrylate, dipropylene glycol di(meth)acrylate, tripropylene glycol di(meth)acrylate, 1,6-hexanediol di(meth)acrylate, bisphenol A diglycidyl ether di(meth)acrylate, tetraethylene glycol di(meth)acrylate, neopentylglycol hydroxypivalate diacrylate, neopentylglycol di(meth)acrylate, 1,4-butanediol diacrylate, 1,3-butylene glycol di(meth)acrylate, dicyclopentanyl di(meth)acrylate, polyethylene glycol diacrylate, 1,4-butanediol oligoacrylate, neopentyl glycol oligoacrylate, 1,6-hexanediol oligoacrylate, trimethylol propane tri(meth)acrylate, trimethylol propane ethoxy tri(meth)acrylate, trimethylol propane propoxy tri(meth)acrylate, pentaerythritol tri(meth)acrylate, glyceryl propoxy tri(meth)acrylate, trimethylol propane trimethacrylate, trimethylol propane ethylene oxide adduct triacrylate, glycerin propylene oxide adduct triacrylate and pentaerythritol tetraacrylate.

The hard coat layer may contain one or two or more (meth)acrylic monomers.

Examples of the (meth)acrylic oligomer include a difunctional or higher polyfunctional urethane (meth)acrylate oligomer [hereinafter also referred to as a polyfunctional urethane (meth)acrylate oligomer], a difunctional or higher polyfunctional polyester (meth)acrylate oligomer [hereinafter also referred to as a polyfunctional polyester (meth)acrylate oligomer] and a difunctional or higher polyfunctional epoxy (meth)acrylate oligomer [hereinafter also referred to as a polyfunctional epoxy (meth)acrylate oligomer. The hard coat layer may contain one or two or more (meth)acrylic oligomers.

Examples of the polyfunctional urethane (meth)acrylate oligomer include: a urethanation reaction product of a (meth)acrylate monomer having at least one (meth)acryloyloxy group and hydroxyl group in one molecule and a polyisocyanate; and a urethanation reaction product of an isocyanate compound that is obtained by reacting a polyol with a polyisocyanate and a (meth)acrylate monomer having at least one (meth)acryloyloxy group and hydroxyl group in one molecule.

Examples of the (meth)acrylate monomer having at least one (meth)acryloyloxy group and hydroxyl group in one molecule to be used in the urethanation reaction include 2-hydroxyethyl (meth)acrylate, 2-hydroxypropyl (meth)acrylate, 2-hydroxybutyl (meth)acrylate, 2-hydroxy-3-phenoxypropyl (meth)acrylate, glycerin di(meth)acrylate, trimethylol propane di(meth)acrylate, pentaerythritol tri(meth)acrylate and dipentaerythritol penta(meth)acrylate.

Examples of the polyisocyanate to be used in the urethanation reaction include polyisocyanates (di- or tri-) such as hexamethylene diisocyanate, lysine diisocyanate, isophorone diisocyanate, dicyclohexylmethane diisocyanate, tolylene diisocyanate, xylylene diisocyanate, diisocyanates obtained by hydrogenation of an aromatic isocyanate among these diisocyanates (e.g., diisocyanates such as hydrogenated tolylene diisocyanate and hydrogenated xylylene diisocyanate), triphenylmethane triisocyanate and dimethylene triphenyl triisocyanate; and polyisocyanates obtained by multimerization of a diisocyanate.

As the polyol to be used in the urethanation reaction, aromatic, aliphatic and alicyclic polyols, a polyester polyol, a polyether polyol, etc. are generally used. Usually, examples of aliphatic and alicyclic polyols include 1,4-butanediol, 1,6-hexanediol, neopentyl glycol, ethylene glycol, propylene glycol, trimethylolethane, trimethylolpropane, dimethylolheptane, dimethylol propionic acid, dimethylol butyric acid, glycerin and hydrogenated bisphenol A.

Examples of the polyester polyol include those obtained by a dehydration condensation reaction of the above-described polyol and a polycarboxylic acid. Specific examples of the polycarboxylic acid include succinic acid, adipic acid, maleic acid, trimellitic acid, hexahydrophthalic acid, phthalic acid, isophthalic acid and terephthalic acid. These polycarboxylic acids may be in the form of an anhydride. Further, examples of the polyether polyol include polyalkylene glycol and a polyoxyalkylene-modified polyol that is obtained by a reaction of the above-described polyol or a phenol with alkylene oxide.

The polyfunctional polyester (meth)acrylate oligomer is obtained by a dehydration condensation reaction using (meth)acrylic acid, a polycarboxylic acid and a polyol. Examples of the polycarboxylic acid to be used in the dehydration

condensation reaction include succinic acid, adipic acid, maleic acid, itaconic acid, trimellitic acid, pyromellitic acid, hexahydrophthalic acid, phthalic acid, isophthalic acid and terephthalic acid. These polycarboxylic acids may be in the form of an anhydride. =~ Further, examples of the polyol to be used in the dehydration condensation reaction include 1,4-butanediol, 1,6-hexanediol, diethylene glycol, triethylene glycol, propylene glycol, neopentyl glycol, dimethylolheptane, dimethylol propionic acid, dimethylol butyric acid, trimethylolpropane, ditrimethylolpropane, pentaerythritol and dipentaerythritol.

The polyfunctional epoxy (meth)acrylate oligomer is obtained by an addition reaction of a polyglycidyl ether and (meth)acrylic acid. Examples of the polyglycidyl ether include ethylene glycol diglycidyl ether, propylene glycol diglycidyl ether, tripropylene glycol diglycidyl ether, 1,6-hexanediol diglycidyl ether and bisphenol A diglycidyl ether.

Examples of the surface modifying agent to be used in the present invention include those that modify surface performance of the hard coat layer such as a leveling agent, an antistatic agent, a surfactant, a water-repellent oil-repellent agent, inorganic particles and organic particles.

Examples of the leveling agent include polyether-modified polyalkylsiloxane, polyether-modified siloxane, polyester-modified hydroxyl group-containing polyalkylsiloxane, polyether-modified polydimethylsiloxane having an alkyl group, modified polyether and silicon-modified acrylic.

Examples of the antistatic agent include glycerin fatty acid ester monoglyceride, glycerin fatty acid ester organic acid monoglyceride, polyglycerin fatty acid ester, sorbitan fatty acid ester, a cationic surfactant and an anionic surfactant.

Examples of the inorganic particles include silica particles, alumina particles, zirconia particles, silicon particles, silver particles and glass particles.

Examples of the organic particles include acrylic particles and silicon particles.

Examples of the surfactant and the water-repellent oil-repellent agent include fluorine-containing surfactants and water-repellent oil-repellent agents such as a fluorine-containing group/lipophilic group-containing oligomer and a fluorine-containing group/hydrophilic group/lipophilic group/UV reactive group-containing oligomer.

The hard coat layer may contain a photopolymerization initiator. In this specification, the photopolymerization initiator means a photoradical generator.

Examples of a monofunctional photopolymerization initiator that can be used in the present invention include: 4-(2-hydroxyethoxy)phenyl(2-hydroxy-2-propyl) ketone [Darocur 2959: manufactured by Merck]; $\alpha$-hydroxy-$\alpha,\alpha'$-dimethylacetophenone [Darocur 1173: manufactured by Merck]; acetophenone-based initiators such as methoxyacetophenone, 2,2'-dimethoxy-2-phenylacetophenone [Irgacure 651] and 1-hydroxy-cyclohexylphenylketone; benzoin ether-based initiators such as benzoin ethyl ether and benzoin isopropyl ether; and other materials including halogenated ketone, acylphosphinoxide and acylphosphonate.

The method for forming the hard coat layer is not particularly limited. For example, it can be formed by applying a hard coat solution onto a layer that is to be positioned under the hard coat layer, followed by performing photopolymerization.

The method of applying the hard coat solution (polymerizable composition) is not particularly limited, and a publicly-known method can be used. Examples thereof include a spin-coating method, a dipping method, a spraying method, a slide coating method, a bar coating method, a roll coating method, a gravure coating method, a meniscus coating method, a flexographic printing method, a screen printing method, a beat coating method and a brushing method.

As a lamp to be used for light irradiation at the time of photopolymerization, a lamp having a light emission distribution at a light wavelength of 420 nm or lower is used. Examples thereof include a low-pressure mercury lamp, a medium-pressure mercury lamp, a high-pressure mercury lamp, an ultrahigh pressure mercury lamp, a chemical lamp, a black light lamp, a microwave-excited mercury lamp and a metal halide lamp. Among them, the high-pressure mercury lamp or metal halide lamp is preferred because it efficiently emits a light in the active wavelength region of the initiator and it does not often emit a short-wavelength light, which reduces viscoelastic properties of a polymer obtained due to crosslinking, or a long-wavelength light, which heats and evaporates a reaction composition.

The irradiation intensity of the above-described lamp is a factor that influences the polymerization degree of the obtained polymer and is suitably controlled depending on every performance of an intended product. When blending a usual cleavage-type initiator having an acetophenone group, the illuminance is preferably 0.1 to 300 $mW/cm^2$. It is particularly preferred that the metal halide lamp is used and that the illuminance is 10 to 40 $mW/cm^2$.

A photopolymerization reaction is inhibited by oxygen in the air or oxygen dissolved in a reactive composition. For this reason, light irradiation is desirably carried out by using a technique that can prevent reaction inhibition caused by oxygen. As one of such techniques, there is a method in which a reactive composition is covered with a film made of polyethylene terephthalate or Teflon to block contact with oxygen and the reactive composition is irradiated with a light through the film. Alternatively, the composition may be irradiated with a light through a lighttransmitting window under an inert atmosphere in which oxygen is replaced with an inert gas such as nitrogen gas and carbon dioxide gas.

When light irradiation is carried out under an inert atmosphere, a constant amount of an inert gas is continuously introduced in order to keep the oxygen concentration in the atmosphere at a low level. By this introduction of the inert gas, an air flow is generated on the surface of a reactive composition to cause monomer evaporation. For suppressing the level

of monomer evaporation, the airflow velocity of the inert gas, as the velocity relative to a hard coat solution-applied layered body that moves under the inert gas atmosphere, is preferably 1 m/sec or less, and more preferably 0.1 m/sec or less. When the airflow velocity is within the above-described range, monomer evaporation due to the air flow is substantially suppressed.

For the purpose of improving adhesion of the hard coat layer, the coated surface may be subjected to a pretreatment. Examples of the pretreatment include publicly-known methods such as a sandblasting method, a solvent treatment method, a corona discharge treatment method, a chromic acid treatment method, a flame treatment method, a hot air treatment method, an ozone treatment method, an ultraviolet treatment method, and a primer treatment method using a resin composition.

The hard coat layer preferably has a pencil hardness of 2H or harder when ultraviolet irradiation is performed using a metal halide lamp having a UV light (254 nm) irradiation output of 20 mW/cm$^2$.

The thickness of the hard coat layer is desirably 1 μm to 40 μm, and more desirably 2 μm to 10 μm. When the thickness is 1 μm or more, sufficient hardness can be obtained. When the thickness is 40 μm or less, the generation of a crack at the time of the curving process can be suppressed. Note that the thickness of the hard coat layer can be measured by observing the cross section thereof using a microscope or the like and performing the actual measurement from the coating film interface to the surface.

In order to improve adhesion to the hard coating, pretreatment of the coating surface may be carried out before the hard coating. Examples of the treatment include a known treatment such as sandblasting, solvent treatment, corona discharge treatment, chromic acid treatment, flame treatment, hot air treatment, ozone treatment, UV treatment, or primer treatment using a resin composition.

<Haze>

For the resin layered body before the hard coating layer in the invention is formed, haze ≤ 1.0% is preferable, haze ≤ 0.8% is more preferable, and haze ≤ 0.7% is particularly preferable. If the haze exceeds 1.0%, the resulting resin layered body may appear whitish when visually inspected.

<Resin Layered Body>

The thickness of the layer containing a thermoplastic resin (B) in the invention affects the surface hardness and/or the impact resistance of the resin layered body. That is, if the thickness of the layer containing a thermoplastic resin (B) is too small, the surface hardness is low, which is not preferable. If the thickness of the layer containing a thermoplastic resin (B) is too large, the impact resistance is poor, which is not preferable. Here, the thickness of the layer containing a thermoplastic resin (B) is preferably from 10 to 250 μm, more preferably from 20 to 200 μm, and still more preferably from 30 to 150 μm.

In the case where the overall thickness of the layer containing a polycarbonate-based resin (A), the layer containing a thermoplastic resin (B), and the hard coating layer in the invention is too small or too large, the molding is difficult. The thickness of the entire resin layered body is preferably from 0.4 to 4.0 mm, more preferably from 0.5 to 3.5 mm, and still more preferably from 0.5 to 3.0 mm.

The difference in the refractive index between the polycarbonate-based resin (A) and the thermoplastic resin (B) in the invention is preferably in the range of from 0 to 0.07, more preferably in the range of from 0 to 0.06, and still more preferably in the range of from 0 to 0.05. The difference in the refractive index between the glass-transition temperature of the polycarbonate-based resin (A) and the thermoplastic resin (B) may be more than 0.07. This results in an increased intensity of light reflected on the interface between the layer containing the polycarbonate-based resin (A) and the layer containing the thermoplastic resin (B). Thus, this may cause defects such as interference fringes.

One or both surfaces of the resin layered body in the invention may be subjected to at least one of any of anti-fingerprint, anti-reflection, anti-fouling, anti-static, weatherproof, or anti-glare treatment. The anti-reflection, anti-fouling, anti-static, weatherproof, or anti-glare treatment process is not particularly limited, and any known process may be used. Examples include: a process for applying a reflectiondecreasing coating material; a process for vapor-depositing a dielectric thin film; or a process for applying an antistatic coating material.

<Optional Additive>

An additional component(s) other than the above-mentioned main components can be optionally included in the base material layer-forming polycarbonate-based resin (A) and/or the surface layer-forming thermoplastic resin (B) in the invention.

For example, the polycarbonate-based resin (A) and/or the thermoplastic resin (B) may be blended with a UV absorber and then used. Note that the hard coating layer in the invention may contain a UV absorber. If the content of the UV

absorber is too large, the excessive UV absorber scatters due to a high temperature depending on a molding process. This may cause a problem due to contamination in the molding environment. In view of the above, the content ratio of the UV absorber is preferably from 0 to 5 mass%, more preferably from 0 to 3 mass%, and still more preferably from 0 to 1 mass%. Examples of the UV absorber include: a benzophenone-based UV absorber (e.g., 2,4-dihydroxy benzophenone, 2-hydroxy-4-methoxy benzophenone, 2-hydroxy-4-n-octoxy benzophenone, 2-hydroxy-4-dodecyloxy benzophenone, 2-hydroxy-4-octadecyloxy benzophenone, 2,2'-dihydroxy-4-methoxy benzophenone, 2,2'-dihydroxy-4,4'-dimethoxy benzophenone, 2,2',4,4'-tetrahydroxy benzophenone); a benzotriazole-based UV absorber (e.g., 2-(2-hydroxy-5-methylphenyl)benzotriazole, 2-(2-hydroxy-3,5-di-t-butylphenyl)benzotriazole, 2-(2-hydroxy-3-t-butyl-5-methylphenyl)benzotriazole, (2H-benzotriazole-2-yl)-4,6-bis(1-methyl-1-phenylethyl)phenol); a benzoate-based UV absorber (e.g., phenyl salicylate, 2,4-di-t-butylphenyl-3,5-di-t-butyl-4-hydroxy benzoate); a hindered amine-based UV absorber (e.g., bis(2,2,6,6-tetramethylpiperidine-4-yl)sebacate); a triazine-based UV absorber (e.g., 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine); or a sesamol-type benzotriazole-based UV absorber (e.g., 2-[2-(6-hydroxybenzo[1,3]dioxole-5-yl)-2H-benzotriazole-5-yl]ethyl methacrylate, 2-[2-(6-hydroxybenzo[1,3]dioxole-5-yl)-2H-benzotriazole-5-yl]ethyl acrylate, 3-[2-(6-hydroxybenzo[1,3]dioxole-5-yl)-2H-benzotriazole-5-yl]propyl methacrylate, 3-[2-(6-hydroxybenzo[1,3]dioxole-5-yl)-2H-benzotriazole-5-yl]propyl acrylate, 4-[2-(6-hydroxybenzo[1,3]dioxole-5-yl)-2H-benzotriazole-5-yl]butyl methacrylate, 4-[2-(6-hydroxybenzo[1,3]dioxole-5-yl)-2H-benzotriazole-5-yl]butyl acrylate, 2-[2-(6-hydroxybenzo[1,3]dioxole-5-yl)-2H-benzotriazole-5-yloxy]ethyl methacrylate, 2-[2-(6-hydroxybenzo[1,3]dioxole-5-yl)-2H-benzotriazole-5-yloxy]ethyl acrylate, 2-[3-{2-(6-hydroxybenzo[1,3]dioxole-5-yl)-2H-benzotriazole-5-yl}propanoyloxy]ethyl methacrylate, 2-[3-[2-(6-hydroxybenzo[1,3]dioxole-5-yl)-2H-benzotriazole-5-yl]propanoyloxy]ethyl acrylate, 4-[3-{2-(6-hydroxybenzo[1,3]dioxole-5-yl)-2H-benzotriazole-5-yl}propanoyloxy]butyl methacrylate, 4-[3-{2-(6-hydroxybenzo[1,3]dioxole-5-yl)-2H-benzotriazole-5-yl}propanoyloxy]butyl acrylate, 2-[3-{2-(6-hydroxybenzo[1,3]dioxole-5-yl)-2H-benzotriazole-5-yl}propanoyloxy]ethyl methacrylate, 2-[3-[2-(6-hydroxybenzo[1,3]dioxole-5-yl)-2H-benzotriazole-5-yl]propanoyloxy]ethyl acrylate, 2-(methacryloyloxy)ethyl-2-(6-hydroxybenzo[1,3]dioxole-5-yl)-2H-benzotriazole-5-carboxylate, 2-(acryloyloxy)ethyl-2-(6-hydroxybenzo[1,3]dioxole-5-yl)-2H-benzotriazole-5-carboxylate, 4-(methacryloyloxy)butyl-2-(6-hydroxybenzo[1,3]dioxole-5-yl)-2H-benzotriazole-5-carboxylate, 4-(acryloyloxy)butyl-2-(6-hydroxybenzo[1,3]dioxole-5-yl)-2H-benzotriazole-5-carboxylate). The mixing procedure used is not particularly limited, and may be a procedure for compounding all amounts of the mixture, a procedure for dry-blending a master batch, or a procedure for dry-blending all amounts of the mixture.

Each additive, other than the above-mentioned UV absorber, can be optionally blended and used in the base material layer-forming polycarbonate-based resin (A) and/or the surface layer-forming thermoplastic resin (B) in the invention. Examples of such an additive include an anti-oxidant, anti-colorant, anti-static agent, mold release agent, lubricant, dye, pigment, plasticizer, flame retardant, resin modifier, compatibilizer, or reinforcing material such as an organic or inorganic filler. The mixing procedure used is not particularly limited, and may be a procedure for compounding all amounts of the mixture, a procedure for dry-blending a master batch, or a procedure for dry-blending all amounts of the mixture.

Each material for the layer containing the polycarbonate-based resin (A), the layer containing the thermoplastic resin (B), or the hard coating, for example, the polycarbonate-based resin (A), the thermoplastic resin (B), or the like in the invention is preferably filtered and purified by filtering. A resin layered body without poor appearance such as foreign matters or defects may be obtained by producing or layering the material after filtering. The filtering process is not particularly limited, and it is possible to use, for instance, melt filtration, solution filtration, or a combination of the two.

The filter used is not particularly limited, and a known filter may be used. The filter may be selected, if appropriate, depending on the temperature, the viscosity, and/or the filtration precision used for each material. Examples of filter materials include, but are not limited to, nonwoven fabrics or roving yarn rolls made of polypropylene, cotton, polyester, viscose rayon, or fiberglass; phenolic resinimpregnated cellulose; sintered metal fiber nonwoven fabrics; sintered metal powder; breaker plates; or combinations thereof. Any of them may be used. In consideration of heat resistance, durability, or pressure resistance, in particular, a sintered metal fiber nonwoven fabric type is preferable.

The filtration precision for the polycarbonate-based resin (A) or the thermoplastic resin (B) is 50 $\mu$m or smaller, preferably 30 $\mu$m or smaller, and more preferably 10 $\mu$m or smaller. In addition, the filtration precision for the hard coating agent is 20 $\mu$m or smaller, preferably 10 $\mu$m or smaller, and more preferably 2 $\mu$m or smaller because the agent is applied on the top layer of the resin layered body.

A polymer filter, which is used for melt filtering a thermoplastic resin, for instance, is preferably used for filtering the polycarbonate-based resin (A) or the thermoplastic resin (B). Polymer filters are classified by their structure into leaf disc filters, candle filters, packed disc filters, cylindrical filters, or other filters. Particularly, each leaf disk filter, which has a large effective filtration area, is suitable.

<Heat Bending>

The heat bending of the resin layered body in the invention is not particularly limited. For example, in the "hot press forming", a pressing machine is installed with molds: a convex mold (male mold) and a concave mold (female mold); and a layered sheet, which has been heated and softened, is then sandwiched between the two molds. In the "vacuum forming", a layered sheet, which has been heated and softened, and a convex mold (male mold) are set in a vacuum state, so that the layered sheet is tightly attached to the mold to finally produce a desired shape. In the "pressure forming", a pressure larger than the atmospheric pressure is applied to a layered sheet, which has been heated and softened, and a convex mold (male mold), so that the layered sheet is tightly attached to the mold to finally produce a desired shape. Even in the case where a resin layered body of the invention is thermally bent at a low temperature (e.g., at from 120 to 130°C), a thermoformed product without spring back can be obtained.

<Thermoformed Product>

A layered sheet using a conventional polycarbonate resin (e.g., Iupilon S-2000, Iupilon S-1000, or Iupilon E-2000, commercially available from Mitsubishi Engineering-Plastics Corporation) may be subjected to hot press forming. In this case, the sheet has to be heated until the polycarbonate resin expands sufficiently at 135 to 145°C. As a result, excessive heat is applied to a thermoplastic resin. Thus, detachment occurs at the interface between the thermoplastic resin layer and the polycarbonate resin layer. This may cause surface whitening or cracking. On the other hand, to suppress poor thermoforming, hot press forming may be performed at a low temperature of 120°C to 130°C. In this case, the mold shape is not necessarily reproduced. Also, "spring back", in which the resulting mold shape returns to a flat one, may occur.

By contrast, a specific polycarbonate-based resin (A) is used for a resin layered body according to an embodiment of the invention. Thus, even in the case of hot press forming at a low temperature of 120°C to 130°C, no spring back occurs. This makes it possible to produce a thermoformed product having excellent designability at low temperatures.

In addition, hot press forming at a low temperature of 120°C to 130°C may be carried out on a resin layered body having a thermoplastic resin-containing layer on a polycarbonate resin-containing layer and having a hard coating layer on a surface of the thermoplastic resin-containing layer. This case may result in cracking at a bent portion of the resin layered body.

By contrast, a specific thermoplastic resin (B) is used for a resin layered body according to an embodiment of the invention. Thus, even in the case where the resin layered body having a hard coating layer on a surface of the thermoplastic resin layer is subjected to hot press forming at a low temperature of 120°C to 130°C, no cracking occurs at a bent portion of the resin layered body. This makes it possible to produce a thermoformed product having excellent designability at low temperatures.

<Applications>

A molded product (e.g., a thermoformed product) in this embodiment is a molded product including a resin layered body configured according to the above-mentioned various preferable embodiments of the invention. For instance, the shape, pattern, color, and size of the molded product are not limited, and may be optionally set depending on use thereof.

The resin layered body or thermoformed product in this embodiment has excellent thermoformability at a low temperature (e.g., from 120 to 130°C) and may have reduced occurrence of interference fringes. Thus, they are preferably used for transparent substrate materials and/or transparent protective materials. Specific examples include transparent substrate materials or transparent protective materials used for portable display devices (e.g., mobile phone terminals, portable electronic game devices, portable information terminals, mobile PCs) or installed display devices (e.g., note-type PC or desk-top PC liquid crystal monitors, car navigation liquid crystal monitors, liquid crystal TVs). Among them, they are preferably used as touch-panel front surface protective plates or front plates for car navigation systems, OA equipment, or portable electronic devices, which require enhanced designability.

EXAMPLES

Hereinafter, embodiments in the invention are further described in detail with reference to Examples. However, the embodiments are not limited to these Examples.

<Composition Ratio between Monomer Units in Styrene Copolymer>

JNM-AL400, manufactured by JEOL Ltd., was used to measure $^1$H-NMR and $^{13}$C-NMR (400 MHz; the solvent is $CDCl_3$). The resulting values were used for calculation.

<Glass-Transition Temperature>

A differential scanning calorimeter DSC6200, manufactured by Seiko Instruments Inc., was used. While nitrogen was flowed at 30 ml/min, the temperature was raised at 10°C/min from 30°C to 200°C, and the temperature was then decreased at 50°C/min from 200°C to 30°C. After that, the temperature was again raised at 10°C/min from 30°C to 200°C. The point where a baseline and a tangential line at an inflection point intersected during the second temperature rise was used as a glass-transition temperature.

<Pellet Appearance>

Pellet appearance was visually tested during pellet preparation. Whether or not the pellet appearance passed the test was determined using the criteria below. The case "○" passed the test.

O: transparent
×: semi-transparent or opaque

<Refractive Index>

A test piece was prepared with an injection molding machine, and then cut into pieces of length 40 mm × width 10 mm × thickness 3 mm. The refractive index of each sample was measured with a multiwavelength Abbe refractometer DR-M2, manufactured by ATAGO CO., LTD. The measurement temperature was 20°C, the measurement wavelength was 589 nm, and the intermediate liquid used was monobromo naphthalene.

<Total Light Transmittance>

The total light transmittance of each resin layered body was measured with a reflection/transmittance meter HR-100 model (manufactured by MURAKAMI COLOR RESEARCH LABORATORY CO., LTD.) in accordance with JIS K7361-1.

<Haze>

The haze of each resin layered body was measured with a reflection/transmittance meter HR-100 model (manufactured by MURAKAMI COLOR RESEARCH LABORATORY CO., LTD.) in accordance with JIS K7136.

<Pencil Hardness>

The pencil hardness was evaluated and set to the hardest pencil hardness that did not cause any scratch while a pencil was imposed at an angle of 45 degrees with respect to a surface of a layer containing a thermoplastic resin (B) at or near the center of each resin layered body or a surface of the hard coating layer on the layer containing a thermoplastic resin (B) and the hardness was gradually increased on the surface under a load of 750 g in accordance with JIS K 5600-5-4.

<Interference Fringes>

The interference fringes were tested by attaching a black tape (a black vinyl tape, model 117BLA, manufactured by 3M Japan, Inc.) to the side of the layer containing a polycarbonate-based resin (A) or the side of the layer containing a thermoplastic resin (B) of each resin layered body, and irradiating the resin layered body from the surface of the layer containing a thermoplastic resin (B) while using a three-wavelength-type fluorescent lamp (an inverter light 60AL-60231; TECHNICA, Ltd.). Whether or not the interference fringes passed the test was determined using the criteria below. The case "○" passed the test.

O: no interference fringes appear or interference fringes are observed weakly.
×: interference fringes are observed strongly.

<Hot Press Forming Processability>

Molds, a convex mold (male mold) and a concave mold (female mold), that caused 1 mmt resin layered body to be bent 50 mmR were manufactured. A hot press formed product was produced such that a resin layered body was preheated at 90°C for 1 min before forming; the molds were placed such that a surface of the thermoplastic resin (B) was made convex before the hard coating application and the hard coating surface was made convex after the hard coating application; and the resin layered body was pressed at a mold temperature of 120°C for 3 min and then allowed to cool.

<Cracking at Bent Portion>

Cracking at a bent portion of the above hot press formed product was visually tested. Whether or not the cracking at the bent portion passed the test was determined using the criteria below. The case "○" passed the test.

O: no cracking is observed at a bent portion of the hot press formed product.
×: cracking appears at a bent portion of the hot press formed product.

<Spring Back>

Each hot press formed product was fit around a 50 mmR cylinder. Then, whether or not the spring back passed a test was determined using the criteria below. The case "O" passed the test.

O: fit to the cylinder. (no spring back)
×: does not fit to the cylinder. (spring back occurs)

For Examples, the following materials were used as polycarbonate-based resin (A-1), thermoplastic resins (B-1) to (B-4), methacrylic resins (C-1) to (C-2), styrene copolymer (D-1), and hard coating (J-1). However, the materials are not limited to them. Meanwhile, for Comparative Examples, the below-described polycarbonate-based resin (G-1), thermoplastic resins (F-1) to (F-9), styrene copolymers (E-1) to (E-2), pre-hard-coating-application thermoplastic resins (I-1) to (I-42), and post-hard-coating-application thermoplastic resins (L-1) to (L-42) were each used.

<Methacrylic Resins (C-1) to (C-2), Styrene Copolymer (D-1), Styrene Copolymers (E-1) to (E-2), and Polycarbonate-based resin (G-1)>

Methacrylic resin (C-1): ALTUGLAS (registered trademark) V020 (weight-average molecular weight: 127,000; glass-transition temperature: 134°C; melt flow rate at a temperature of 230°C and a load of 3.8 kg: 1.8 g/10 min; refractive index: 1.49; mm/mr/rr = 7.4 mol%/37.4 mol%/55.2 mol%), manufactured by ARKEMA Inc.

Methacrylic resin (C-2): ALTUGLAS (registered trademark) V040 (weight-average molecular weight: 84,100; glass-transition temperature: 109°C; melt flow rate at a temperature of 230°C and a load of 3.8 kg: 3.5 g/10 min; refractive index: 1.49), manufactured by ARKEMA Inc.

Styrene copolymer (D-1): XIBOND 160 ((d1)/(d2) = styrene/maleic anhydride = 78 mass%/22 mass%; weight-average molecular weight: 69,500; glass-transition temperature: 143°C; melt flow rate at a temperature of 230°C and a load of 3.8 kg: 7.6 g/10 min; refractive index: 1.58), manufactured by Polyscope Inc.

Styrene copolymer (E-1): XIBOND 140 ((d1)/(d2) = styrene/maleic anhydride = 85 mass%/15 mass%; weight-average molecular weight: 134,000; glass-transition temperature: 129°C; melt flow rate at a temperature of 230°C and a load of 3.8 kg: 6.9 g/10 min; refractive index: 1.59), manufactured by Polyscope Inc.

Styrene copolymer (E-2): XIBOND 180 ((d1)/(d2) = styrene/maleic anhydride = 67 mass%/33 mass%; weight-average molecular weight: 50,100; glass-transition temperature: 157°C; melt flow rate at a temperature of 230°C and a load of 3.8 kg: 1.0 g/10 min; refractive index: 1.59), manufactured by Polyscope Inc.

Polycarbonate-based resin (G-1): Iupilon S-1000 (weight-average molecular weight: 33,000; glass-transition temperature: 147°C; melt flow rate at a temperature of 300°C and a load of 1.2 kg: 7.5 g/10 min; refractive index: 1.59), manufactured by Mitsubishi Engineering-Plastics Corporation.

<To Synthesize Polycarbonate-Based Resin (A-1)>

Synthesis Example 1 [To Synthesize Polycarbonate Resin Terminating Agent]

Based on P143 to 150 of "Yuki-Kagaku Handbook (Organic Chemistry Handbook)", 4-hydroxybenzoic acid, manufactured by TOKYO CHEMICAL INDUSTRY CO., LTD., and 1-hexadecanol, manufactured by TOKYO CHEMICAL

INDUSTRY CO., LTD., were used and subjected to esterification, namely a dehydration reaction, to produce hexadecyl p-hydroxybenzoate (CEPB).

Synthesis Example 2 [To Produce Pellet of Polycarbonate-Based Resin (A-1)]

First, 7.1 kg (31.14 mol) of bisphenol A (hereinafter, referred to as BPA), manufactured by Nippon Steel & Sumikin Chemical Co., Ltd., and 30 g of hydrosulfite were added to and dissolved in 57.2 kg of 9 w/w% aqueous sodium hydroxide. Next, 40 kg of dichloromethane was added thereto, and the mixture was stirred while the solution temperature was kept in the range of 15°C to 25°C. Then, 4.33 kg of phosgene was blown thereinto over 30 min. The phosgene blowing was followed by addition of a solution in which 6 kg of 9w/w% aqueous sodium hydroxide, 11 kg of dichloromethane, and 443 g (1.22 mol) of hexadecyl p-hydroxybenzoate (CEPB) as a terminating agent were dissolved in 10 kg of methylene chloride. Then, the mixture was vigorously stirred and emulsified. After that, 10 ml of triethylamine as a polymerization catalyst was added to the resulting solution, and polymerization was performed for about 40 min.
Subsequently, the resulting polymerization solution was separated into an aqueous phase and an organic phase. The organic phase was neutralized with phosphoric acid, and repeatedly washed with pure water until the pH of the washing solution became neutral. The organic solvent was evaporated and distilled away from this purified polycarbonate resin solution to prepare polycarbonate resin powder.
The resulting polycarbonate resin powder was melt-kneaded with a twin-screw extruder with a screw diameter of 35 mm and at a cylinder temperature of 260°C, and was extruded into a strand shape and pelletized using a pelletizer.
This polycarbonate-based resin (A-1) had a weight-average molecular weight of 29,000, a glass-transition temperature of 127°C, a melt flow rate, at a temperature of 300°C and a load of 1.2 kg, of 12.1 g/10 min, and a refractive index of 1.59.

Production Example 1A [To Produce Pellet of Thermoplastic Resin (B-1)]

First, 500 ppm of phosphorus-based additive PEP-36 (manufactured by ADEKA CORPORATION) and 0.2 mass% of monoglyceride stearate (trade name: H-100, manufactured by RIKEN VITAMIN CO., LTD.) were added to 100 parts by mass of the total of 50 parts by mass of methacrylic resin (C-1) and 50 parts by mass of styrene copolymer (D-1). The mixture was blended with a blender for 20 min, and was then melt-kneaded and extruded into a strand shape by using a polymer filter (with a mesh size of 10 μm)-equipped twin-screw extruder (TEM-26SS; L/D≅40; manufactured by TOSHIBA MACHINE CO., LTD.) with a screw diameter of 26 mm and at a cylinder temperature of 240°C. Subsequently, a pelletizer was used to prepare a pellet. The pellet of thermoplastic resin (B-1) was able to be stably produced.
The pellet of thermoplastic resin (B-1) had (transparent) appearance: O, a glass-transition temperature of 121°C, a melt flow rate, at a temperature of 230°C and a load of 3.8 kg, of 2.5 g/10 min, and a refractive index of 1.54.

Production Example 2A [To Produce Pellet of Thermoplastic Resin (B-2)]

First, 500 ppm of phosphorus-based additive PEP-36 and 0.2 mass% of monoglyceride stearate were added to 100 parts by mass of the total of 25 parts by mass of methacrylic resin (C-1) and 75 parts by mass of styrene copolymer (D-1). Substantially the same procedure as in Production Example 1A was repeated to blend and pelletize the mixture. The pellet of thermoplastic resin (B-2) was able to be stably produced.
The pellet of thermoplastic resin (B-2) had (transparent) appearance: O, a glass-transition temperature of 132°C, a melt flow rate, at a temperature of 230°C and a load of 3.8 kg, of 3.5 g/10 min, and a refractive index of 1.56.

Production Example 3A [To Produce Pellet of Thermoplastic Resin (B-3)]

First, 500 ppm of phosphorus-based additive PEP-36 and 0.2 mass% of monoglyceride stearate were added to 100 parts by mass of the total of 50 parts by mass of methacrylic resin (C-2) and 50 parts by mass of styrene copolymer (D-1). Substantially the same procedure as in Production Example 1A was repeated to blend and pelletize the mixture. The pellet of thermoplastic resin (B-3) was able to be stably produced.
The pellet of thermoplastic resin (B-3) had (transparent) appearance: O, a glass-transition temperature of 125°C, a melt flow rate, at a temperature of 230°C and a load of 3.8 kg, of 4.0 g/10 min, and a refractive index of 1.54.

Production Example 4A [To Produce Pellet of Thermoplastic Resin (B-4)]

First, 500 ppm of phosphorus-based additive PEP-36 and 0.2 mass% of monoglyceride stearate were added to 100 parts by mass of the total of 25 parts by mass of methacrylic resin (C-2) and 75 parts by mass of styrene copolymer (D-1). Substantially the same procedure as in Production Example 1A was repeated to blend and pelletize the mixture. The

pellet of thermoplastic resin (B-4) was able to be stably produced.
The pellet of thermoplastic resin (B-4) had (transparent) appearance: O, a glass-transition temperature of 136°C, a melt flow rate, at a temperature of 230°C and a load of 3.8 kg, of 4.6 g/10 min, and a refractive index of 1.56.

Comparative Production Example 1A [To Produce Pellet of Thermoplastic Resin (F-1)]

First, 500 ppm of phosphorus-based additive PEP-36 and 0.2 mass% of monoglyceride stearate were added to 100 parts by mass of the total of 75 parts by mass of methacrylic resin (C-1) and 25 parts by mass of styrene copolymer (D-1). Substantially the same procedure as in Production Example 1A was repeated to blend and pelletize the mixture. The pellet of thermoplastic resin (F-1) was able to be stably produced.
The pellet of thermoplastic resin (F-1) had (transparent) appearance: O, a glass-transition temperature of 113°C, a melt flow rate, at a temperature of 230°C and a load of 3.8 kg, of 2.0 g/10 min, and a refractive index of 1.51.

Comparative Production Example 2A [To Produce Pellet of Thermoplastic Resin (F-2)]

First, 500 ppm of phosphorus-based additive PEP-36 and 0.2 mass% of monoglyceride stearate were added to 100 parts by mass of the total of 75 parts by mass of methacrylic resin (C-2) and 25 parts by mass of styrene copolymer (D-1). Substantially the same procedure as in Production Example 1A was repeated to blend and pelletize the mixture. The pellet of thermoplastic resin (F-2) was able to be stably produced.
The pellet of thermoplastic resin (F-2) had (transparent) appearance: O, a glass-transition temperature of 117°C, a melt flow rate, at a temperature of 230°C and a load of 3.8 kg, of 3.7 g/10 min, and a refractive index of 1.51.

Comparative Production Example 3A [To Produce Pellet of Thermoplastic Resin (F-3)]

First, 500 ppm of phosphorus-based additive PEP-36 and 0.2 mass% of monoglyceride stearate were added to 100 parts by mass of methacrylic resin (C-1). Substantially the same procedure as in Production Example 1A was repeated to blend and pelletize the mixture. The pellet of thermoplastic resin (F-3) was able to be stably produced.
The pellet of thermoplastic resin (F-3) had (transparent) appearance: O, a glass-transition temperature of 109°C, a melt flow rate, at a temperature of 230°C and a load of 3.8 kg, of 1.8 g/10 min, and a refractive index of 1.49.

Comparative Production Example 4A [To Produce Pellet of Thermoplastic Resin (F-4)]

First, 500 ppm of phosphorus-based additive PEP-36 and 0.2 mass% of monoglyceride stearate were added to 100 parts by mass of methacrylic resin (C-2). Substantially the same procedure as in Production Example 1A was repeated to blend and pelletize the mixture. The pellet of thermoplastic resin (F-4) was able to be stably produced.
The pellet of thermoplastic resin (F-4) had (transparent) appearance: O, a glass-transition temperature of 111°C, a melt flow rate, at a temperature of 230°C and a load of 3.8 kg, of 3.5 g/10 min, and a refractive index of 1.49.

Comparative Production Example 5A [To Produce Pellet of Thermoplastic Resin (F-5)]

First, 500 ppm of phosphorus-based additive PEP-36 and 0.2 mass% of monoglyceride stearate were added to 100 parts by mass of styrene copolymer (D-1). Substantially the same procedure as in Production Example 1A was repeated to blend and pelletize the mixture. The pellet of thermoplastic resin (F-5) was able to be stably produced.
The pellet of thermoplastic resin (F-5) had (transparent) appearance: O, a glass-transition temperature of 143°C, a melt flow rate, at a temperature of 230°C and a load of 3.8 kg, of 7.6 g/10 min, and a refractive index of 1.58.

Comparative Production Example 6A [To Produce Pellet of Thermoplastic Resin (F-6)]

First, 500 ppm of phosphorus-based additive PEP-36 and 0.2 mass% of monoglyceride stearate were added to 100 parts by mass of the total of 50 parts by mass of methacrylic resin (C-1) and 50 parts by mass of styrene copolymer (E-1). Substantially the same procedure as in Production Example 1A was repeated to blend and pelletize the mixture. The pellet of thermoplastic resin (F-6) was able to be stably produced.
The pellet of thermoplastic resin (F-6) had (semi-transparent) appearance: ×.

Comparative Production Example 7A [To Produce Pellet of Thermoplastic Resin (F-7)]

First, 500 ppm of phosphorus-based additive PEP-36 and 0.2 mass% of monoglyceride stearate were added to 100 parts by mass of the total of 50 parts by mass of methacrylic resin (C-2) and 50 parts by mass of styrene copolymer

(E-1). Substantially the same procedure as in Production Example 1A was repeated to blend and pelletize the mixture. The pellet of thermoplastic resin (F-7) was able to be stably produced.

The pellet of thermoplastic resin (F-7) had (semi-transparent) appearance: ×.

Comparative Production Example 8A [To Produce Pellet of Thermoplastic Resin (F-8)]

First, 500 ppm of phosphorus-based additive PEP-36 and 0.2 mass% of monoglyceride stearate were added to 100 parts by mass of the total of 50 parts by mass of methacrylic resin (C-1) and 50 parts by mass of styrene copolymer (E-2). Substantially the same procedure as in Production Example 1A was repeated to blend and pelletize the mixture. The pellet of thermoplastic resin (F-8) was able to be stably produced.

The pellet of thermoplastic resin (F-8) had (opaque) appearance: ×.

Comparative Production Example 9A [To Produce Pellet of Thermoplastic Resin (F-9)]

First, 500 ppm of phosphorus-based additive PEP-36 and 0.2 mass% of monoglyceride stearate were added to 100 parts by mass of the total of 50 parts by mass of methacrylic resin (C-2) and 50 parts by mass of styrene copolymer (E-2). Substantially the same procedure as in Production Example 1A was repeated to blend and pelletize the mixture. The pellet of thermoplastic resin (F-9) was able to be stably produced.

The pellet of thermoplastic resin (F-9) had (opaque) appearance: ×.

[Table 2]

Table 2

| Example | Thermoplastic resin B or F | Methacrylic resin C | Styrene copolymer D or E | Composition ratio [mass%] in copolymer D or E | | Dry-blending ratio [mass%] | Grasstransition temperature [°C] | | Weight-average molecular weight | | Pellet appearance | Grasstransition temperature [°C] of thermoplastic resin B or F | Melt flow rate [g/10min] of thermoplastic resin B or F | Refractive index of thermoplastic resin B or F |
|---|---|---|---|---|---|---|---|---|---|---|---|---|---|---|
| | | | | Styrene | Maleic anhydride | C/D or E | C | o or E | C | D or E | | | | |
| Production Example 1A | B-1 | Methacrylic resin (C-1) | Styrene copolymer (D-1) | 78 | 22 | 50/50 | 109 | 143 | 127,000 | 69,500 | ○ (transparent) | 121 | 2.5 | 1.54 |
| Production Example 2A | B-2 | Methacrylic resin (C-1) | Styrene copolymer (D-1) | 78 | 22 | 25/75 | 109 | 143 | 127,000 | 69,500 | ○ (transparent) | 132 | 3.5 | 1.56 |
| Production Example 3A | B-3 | Methacrylic resin (C-2) | Styrene copolymer (D-1) | 78 | 22 | 50/50 | 111 | 143 | 84,100 | 69,500 | ○ (transparent) | 125 | 4.0 | 1.54 |
| Production Example 4A | B-4 | Methacrylic resin (C-2) | Styrene copolymer (D-1) | 78 | 22 | 25/75 | 111 | 143 | 84,100 | 69,500 | ○ (transparent) | 136 | 4.6 | 1.56 |
| Comparative Production Example 1A | F-1 | Methacrylic resin (C-1) | Styrene copolymer (D-1) | 78 | 22 | 75/25 | 109 | 143 | 127,000 | 69,500 | ○ (transparent) | 113 | 2.0 | 1.51 |
| Comparative Production Example 2A | F-2 | Methacrylic resin (C-2) | Styrene copolymer (D-1) | 78 | 22 | 75/25 | 111 | 143 | 84,100 | 69,500 | ○ (transparent) | 117 | 3.7 | 1.51 |
| Comparative Production Example 3A | F-3 | Methacrylic resin (C-1) | - | - | - | 100/0 | 109 | - | 127,000 | - | ○ (transparent) | 109 | 1.8 | 1.49 |
| Comparative Production Example 4A | F-4 | Methacrylic resin (C-2) | - | - | - | 100/0 | 111 | - | 84,100 | - | ○ (transparent) | 111 | 3.5 | 1.49 |
| Comparative Production Example 5A | F-5 | - | Styrene copolymer (D-1) | 78 | 22 | 0/100 | - | 143 | - | 69,500 | ○ (transparent) | 143 | 7.6 | 1.58 |

(continued)

| Example | Thermoplastic resin B or F | Methacrylic resin C | Styrene copolymer D or E | Composition ratio [mass%] in copolymer D or E | | Dry-blending ratio [mass%] | Grasstransition temperature [°C] | | Weight-average molecular weight | | Pellet appearance | Grasstransition temperature [°C] of thermoplastic resin B or F | Melt flow rate [g/10min] of thermoplastic resin B or F | Refractive index of thermoplastic resin B or F |
|---|---|---|---|---|---|---|---|---|---|---|---|---|---|---|
| | | | | Styrene | Maleic anhydride | C/D or E | C | o or E | C | D or E | | | | |
| Comparative Production Example 6A | F-6 | Methacrylic resin (C-1) | Styrene copolymer (E-1) | 85 | 15 | 50/50 | 109 | 129 | 127,000 | 134,000 | × (semi-transparent) | | | |
| Comparative Production Example 7A | F-7 | Methacrylic resin (C-2) | Styrene copolymer (E-1) | 85 | 15 | 50/50 | 111 | 129 | 84,100 | 134,000 | × (semi-transparent) | | | |
| Comparative Production Example 8A | F-8 | Methacrylic resin (C-1) | Styrene copolymer (E-2) | 67 | 33 | 50/50 | 109 | 157 | 127,000 | 50,100 | × (opaque) | | | |
| Comparative Production Example 9A | F-9 | Methacrylic resin (C-2) | Styrene copolymer (E-2) | 67 | 33 | 50/50 | 111 | 157 | 84,100 | 50,100 | × (opaque) | | | |

Production Example 1B [To Produce Resin Layered Body (H-1)]

Multilayer extrusion equipment including a single screw extruder with a screw diameter of 32 mm, a single screw extruder with a screw diameter of 65 mm, a feed block connected to all the extruders, a multilayer extruder with a T-die connected to the feed block and having a width of 650 mm, and a multi-manifold die configured to connect the multilayer extruder to each extruder was used to form a resin layered body. The thermoplastic resin (B-1) obtained in Production Example 1A was continuously injected into the single screw extruder with a screw diameter of 32 mm, and then extruded under conditions at a cylinder temperature of 240°C and a discharge volume of 2.0 kg/h. In addition, the polycarbonate-based resin (A-1) obtained at Synthesis Example 2 was continuously injected into the single screw extruder with a screw diameter of 65 mm, and then extruded under conditions at a cylinder temperature of 280°C and a discharge volume of 31.8 kg/h. The feed block connected to all the extruders was provided with a distribution pin for two components and two layers. Here, the temperature was set to 270°C and the thermoplastic resin (B-1) and the polycarbonate-based resin (A-1) were then injected and layered.

The T-die, which was connected thereto and was at a temperature of 270°C, was used to extrude the material into a sheet shape. A mirror surface was transferred, while cooling, thereon using three mirror finishing rolls at a temperature of, from the upstream side, 110°C, 105°C, or 165°C to produce a resin layered body (H-1) including the thermoplastic resin (B-1) and the polycarbonate-based resin (A-1). The overall thickness of a center portion of the resulting resin layered body (H-1) was 1000 μm and the thickness of the surface layer (the layer containing a thermoplastic resin (B)) was 60 μm. In this resin layered body (H-1), the total light transmittance was 90.9%, the haze was 0.3%, the pencil hardness was H, the interference fringes were O, the cracking at a bent portion (hot press forming processability) was ○, and the spring back (hot press forming processability) was O.

Production Example 2B [To Produce Resin Layered Body (H-2)]

Except that the discharge volume of the single screw extruder with a screw diameter of 32 mm was changed to 3.4 kg/h and the discharge volume of the single screw extruder with a screw diameter of 65 mm was changed to 28.6 kg/h, substantially the same procedure as for the resin layered body (H-1) in Production Example 1B was repeated to produce a resin layered body (H-2) including the thermoplastic resin (B-1) and the polycarbonate-based resin (A-1). The overall thickness of a center portion of the resulting resin layered body (H-2) was 1000 μm and the thickness of the surface layer was 100 μm. In this resin layered body (H-2), the total light transmittance was 90.9%, the haze was 0.5%, the pencil hardness was 2H, the interference fringes were ○, the cracking at a bent portion (hot press forming processability) was ○, and the spring back (hot press forming processability) was O.

Production Example 3B [To Produce Resin Layered Body (H-3)]

Except that the discharge volume of the single screw extruder with a screw diameter of 32 mm was changed to 3.9 kg/h, the discharge volume of the single screw extruder with a screw diameter of 65 mm was changed to 28.1 kg/h, the distribution pin for two components and two layers was changed to a distribution pin for two components and three layers, and the mirror surface was transferred, while cooling, with three mirror finishing rolls changed to a temperature of, from the upstream side, 110°C, 105°C, or 110°C, substantially the same procedure as for the resin layered body (H-1) in Production Example 1B was repeated to produce a resin layered body (H-3) including the thermoplastic resin (B-1) and the polycarbonate-based resin (A-1). The overall thickness of a center portion of the resulting resin layered body (H-3) was 1000 μm and the thicknesses of the respective surface layers were 60 μm and 60 μm. In this resin layered body (H-3), the total light transmittance was 90.9%, the haze was 0.5%, the pencil hardness was H, the interference fringes were ○, the cracking at a bent portion (hot press forming processability) was ○, and the spring back (hot press forming processability) was ○.

Production Example 4B [To Produce Resin Layered Body (H-4)]

Except that the thermoplastic resin (B-2) was used in place of the thermoplastic resin (B-1), substantially the same procedure as for the resin layered body (H-1) in Production Example 1B was repeated to produce a resin layered body (H-4) including the thermoplastic resin (B-2) and the polycarbonate-based resin (A-1). The overall thickness of a center portion of the resulting resin layered body (H-4) was 1000 μm and the thickness of the surface layer was 60 μm. In this resin layered body (H-4), the total light transmittance was 90.7%, the haze was 0.5%, the pencil hardness was H, the interference fringes were O, the cracking at a bent portion (hot press forming processability) was ○, and the spring back (hot press forming processability) was O.

Production Example 5B [To Produce Resin Layered Body (H-5)]

Except that the thermoplastic resin (B-2) was used in place of the thermoplastic resin (B-1), substantially the same procedure as for the resin layered body (H-2) in Production Example 2B was repeated to produce a resin layered body (H-5) including the thermoplastic resin (B-2) and the polycarbonate-based resin (A-1). The overall thickness of a center portion of the resulting resin layered body (H-5) was 1000 μm and the thickness of the surface layer was 100 μm. In this resin layered body (H-5), the total light transmittance was 90.5%, the haze was 0.6%, the pencil hardness was H, the interference fringes were O, the cracking at a bent portion (hot press forming processability) was O, and the spring back (hot press forming processability) was O.

Production Example 6B [To Produce Resin Layered Body (H-6)]

Except that the thermoplastic resin (B-2) was used in place of the thermoplastic resin (B-1), substantially the same procedure as for the resin layered body (H-3) in Production Example 3B was repeated to produce a resin layered body (H-6) including the thermoplastic resin (B-2) and the polycarbonate-based resin (A-1). The overall thickness of a center portion of the resulting resin layered body (H-6) was 1000 μm and the thicknesses of the respective surface layers were 60 μm and 60 μm. In this resin layered body (H-6), the total light transmittance was 90.5%, the haze was 0.6%, the pencil hardness was H, the interference fringes were O, the cracking at a bent portion (hot press forming processability) was ○, and the spring back (hot press forming processability) was ○.

Production Example 7B [To Produce Resin Layered Body (H-7)]

Except that the thermoplastic resin (B-3) was used in place of the thermoplastic resin (B-1), substantially the same procedure as for the resin layered body (H-1) in Production Example 1B was repeated to produce a resin layered body (H-7) including the thermoplastic resin (B-3) and the polycarbonate-based resin (A-1). The overall thickness of a center portion of the resulting resin layered body (H-7) was 1000 μm and the thickness of the surface layer was 60 μm. In this resin layered body (H-7), the total light transmittance was 90.9%, the haze was 0.3%, the pencil hardness was H, the interference fringes were O, the cracking at a bent portion (hot press forming processability) was ○, and the spring back (hot press forming processability) was O.

Production Example 8B [To Produce Resin Layered Body (H-8)]

Except that the thermoplastic resin (B-3) was used in place of the thermoplastic resin (B-1), substantially the same procedure as for the resin layered body (H-2) in Production Example 2B was repeated to produce a resin layered body (H-8) including the thermoplastic resin (B-3) and the polycarbonate-based resin (A-1). The overall thickness of a center portion of the resulting resin layered body (H-8) was 1000 μm and the thickness of the surface layer was 100 μm. In this resin layered body (H-8), the total light transmittance was 90.9%, the haze was 0.5%, the pencil hardness was H, the interference fringes were ○, the cracking at a bent portion (hot press forming processability) was O, and the spring back (hot press forming processability) was O.

Production Example 9B [To Produce Resin Layered Body (H-9)]

Except that the thermoplastic resin (B-3) was used in place of the thermoplastic resin (B-1), substantially the same procedure as for the resin layered body (H-3) in Production Example 3B was repeated to produce a resin layered body (H-9) including the thermoplastic resin (B-3) and the polycarbonate-based resin (A-1). The overall thickness of a center portion of the resulting resin layered body (H-9) was 1000 μm and the thicknesses of the respective surface layers were 60 μm and 60 μm. In this resin layered body (H-9), the total light transmittance was 90.9%, the haze was 0.5%, the pencil hardness was H, the interference fringes were O, the cracking at a bent portion (hot press forming processability) was O, and the spring back (hot press forming processability) was O.

Production Example 10B [To Produce Resin Layered Body (H-10)]

Except that the thermoplastic resin (B-4) was used in place of the thermoplastic resin (B-1), substantially the same procedure as for the resin layered body (H-1) in Production Example 1B was repeated to produce a resin layered body (H-10) including the thermoplastic resin (B-4) and the polycarbonate-based resin (A-1). The overall thickness of a center portion of the resulting resin layered body (H-10) was 1000 μm and the thickness of the surface layer was 60 μm. In this resin layered body (H-10), the total light transmittance was 90.7%, the haze was 0.5%, the pencil hardness was H, the interference fringes were ○, the cracking at a bent portion (hot press forming processability) was O, and the spring back

(hot press forming processability) was O.

Production Example 11B [To Produce Resin Layered Body (H-11)]

Except that the thermoplastic resin (B-4) was used in place of the thermoplastic resin (B-1), substantially the same procedure as for the resin layered body (H-2) in Production Example 2B was repeated to produce a resin layered body (H-11) including the thermoplastic resin (B-4) and the polycarbonate-based resin (A-1). The overall thickness of a center portion of the resulting resin layered body (H-11) was 1000 μm and the thickness of the surface layer was 100 μm. In this resin layered body (H-11), the total light transmittance was 90.5%, the haze was 0.6%, the pencil hardness was H, the interference fringes were ○, the cracking at a bent portion (hot press forming processability) was ○, and the spring back (hot press forming processability) was O.

Production Example 12B [To Produce Resin Layered Body (H-12)]

Except that the thermoplastic resin (B-4) was used in place of the thermoplastic resin (B-1), substantially the same procedure as for the resin layered body (H-3) in Production Example 3B was repeated to produce a resin layered body (H-12) including the thermoplastic resin (B-4) and the polycarbonate-based resin (A-1). The overall thickness of a center portion of the resulting resin layered body (H-12) was 1000 μm and the thicknesses of the respective surface layers were 60 μm and 60 μm. In this resin layered body (H-12), the total light transmittance was 90.5%, the haze was 0.6%, the pencil hardness was H, the interference fringes were ○, the cracking at a bent portion (hot press forming processability) was ○, and the spring back (hot press forming processability) was O.

Comparative Production Example 1B [To Produce Resin Layered Body (I-1)]

Except that the thermoplastic resin (F-1) was used in place of the thermoplastic resin (B-1), substantially the same procedure as for the resin layered body (H-1) in Production Example 1B was repeated to produce a resin layered body (I-1) including the thermoplastic resin (F-1) and the polycarbonate-based resin (A-1). The overall thickness of a center portion of the resulting resin layered body (I-1) was 1000 μm and the thickness of the surface layer was 60 μm. In this resin layered body (I-1), the total light transmittance was 91.2%, the haze was 0.5%, the pencil hardness was 2H, the interference fringes were ○, the cracking at a bent portion (hot press forming processability) was ○, and the spring back (hot press forming processability) was O.

Comparative Production Example 2B [To Produce Resin Layered Body (I-2)]

Except that the thermoplastic resin (F-1) was used in place of the thermoplastic resin (B-1), substantially the same procedure as for the resin layered body (H-2) in Production Example 2B was repeated to produce a resin layered body (I-2) including the thermoplastic resin (F-1) and the polycarbonate-based resin (A-1). The overall thickness of a center portion of the resulting resin layered body (I-2) was 1000 μm and the thickness of the surface layer was 100 μm. In this resin layered body (I-2), the total light transmittance was 91.1%, the haze was 0.6%, the pencil hardness was 2H, the interference fringes were ○, the cracking at a bent portion (hot press forming processability) was ○, and the spring back (hot press forming processability) was O.

Comparative Production Example 3B [To Produce Resin Layered Body (I-3)]

Except that the thermoplastic resin (F-1) was used in place of the thermoplastic resin (B-1), substantially the same procedure as for the resin layered body (H-3) in Production Example 3B was repeated to produce a resin layered body (I-3) including the thermoplastic resin (F-1) and the polycarbonate-based resin (A-1). The overall thickness of a center portion of the resulting resin layered body (I-3) was 1000 μm and the thicknesses of the respective surface layers were 60 μm and 60 μm. In this resin layered body (I-3), the total light transmittance was 91.1%, the haze was 0.6%, the pencil hardness was 2H, the interference fringes were ○, the cracking at a bent portion (hot press forming processability) was ○, and the spring back (hot press forming processability) was ○.

Comparative Production Example 4B [To Produce Resin Layered Body (I-4)]

Except that the thermoplastic resin (F-2) was used in place of the thermoplastic resin (B-1), substantially the same procedure as for the resin layered body (H-1) in Production Example 1B was repeated to produce a resin layered body (I-4) including the thermoplastic resin (F-2) and the polycarbonate-based resin (A-1). The overall thickness of a center portion of the resulting resin layered body (I-4) was 1000 μm and the thickness of the surface layer was 60 μm. In

this resin layered body (I-4), the total light transmittance was 91.2%, the haze was 0.5%, the pencil hardness was 2H, the interference fringes were ○, the cracking at a bent portion (hot press forming processability) was ○, and the spring back (hot press forming processability) was O.

Comparative Production Example 5B [To Produce Resin Layered Body (I-5)]

Except that the thermoplastic resin (F-2) was used in place of the thermoplastic resin (B-1), substantially the same procedure as for the resin layered body (H-2) in Production Example 2B was repeated to produce a resin layered body (I-5) including the thermoplastic resin (F-2) and the polycarbonate-based resin (A-1). The overall thickness of a center portion of the resulting resin layered body (I-5) was 1000 μm and the thickness of the surface layer was 100 μm. In this resin layered body (I-5), the total light transmittance was 91.1%, the haze was 0.6%, the pencil hardness was 2H, the interference fringes were ○, the cracking at a bent portion (hot press forming processability) was ○, and the spring back (hot press forming processability) was O.

Comparative Production Example 6B [To Produce Resin Layered Body (I-6)]

Except that the thermoplastic resin (F-2) was used in place of the thermoplastic resin (B-1), substantially the same procedure as for the resin layered body (H-3) in Production Example 3B was repeated to produce a resin layered body (I-6) including the thermoplastic resin (F-2) and the polycarbonate-based resin (A-1). The overall thickness of a center portion of the resulting resin layered body (I-6) was 1000 μm and the thicknesses of the respective surface layers were 60 μm and 60 μm. In this resin layered body (I-6), the total light transmittance was 91.1%, the haze was 0.6%, the pencil hardness was 2H, the interference fringes were O, the cracking at a bent portion (hot press forming processability) was ○, and the spring back (hot press forming processability) was O.

Comparative Production Example 7B [To Produce Resin Layered Body (I-7)]

Except that the thermoplastic resin (F-3) was used in place of the thermoplastic resin (B-1), substantially the same procedure as for the resin layered body (H-1) in Production Example 1B was repeated to produce a resin layered body (I-7) including the thermoplastic resin (F-3) and the polycarbonate-based resin (A-1). The overall thickness of a center portion of the resulting resin layered body (I-7) was 1000 μm and the thickness of the surface layer was 60 μm. In this resin layered body (I-7), the total light transmittance was 91.6%, the haze was 0.2%, the pencil hardness was 3H, the interference fringes were ×, the cracking at a bent portion (hot press forming processability) was ○, and the spring back (hot press forming processability) was O.

Comparative Production Example 8B [To Produce Resin Layered Body (I-8)]

Except that the thermoplastic resin (F-3) was used in place of the thermoplastic resin (B-1), substantially the same procedure as for the resin layered body (H-2) in Production Example 2B was repeated to produce a resin layered body (I-8) including the thermoplastic resin (F-3) and the polycarbonate-based resin (A-1). The overall thickness of a center portion of the resulting resin layered body (I-8) was 1000 μm and the thickness of the surface layer was 100 μm. In this resin layered body (I-8), the total light transmittance was 91.6%, the haze was 0.2%, the pencil hardness was 3H, the interference fringes were ×, the cracking at a bent portion (hot press forming processability) was ○, and the spring back (hot press forming processability) was O.

Comparative Production Example 9B [To Produce Resin Layered Body (I-9)]

Except that the thermoplastic resin (F-3) was used in place of the thermoplastic resin (B-1), substantially the same procedure as for the resin layered body (H-3) in Production Example 3B was repeated to produce a resin layered body (I-9) including the thermoplastic resin (F-3) and the polycarbonate-based resin (A-1). The overall thickness of a center portion of the resulting resin layered body (I-9) was 1000 μm and the thicknesses of the respective surface layers were 60 μm and 60 μm. In this resin layered body (I-9), the total light transmittance was 91.6%, the haze was 0.2%, the pencil hardness was 3H, the interference fringes were ×, the cracking at a bent portion (hot press forming processability) was ○, and the spring back (hot press forming processability) was O.

Comparative Production Example 10B [To Produce Resin Layered Body (I-10)]

Except that the thermoplastic resin (F-4) was used in place of the thermoplastic resin (B-1), substantially the same procedure as for the resin layered body (H-1) in Production Example 1B was repeated to produce a resin layered

body (I-10) including the thermoplastic resin (F-4) and the polycarbonate-based resin (A-1). The overall thickness of a center portion of the resulting resin layered body (I-10) was 1000 μm and the thickness of the surface layer was 60 μm. In this resin layered body (I-10), the total light transmittance was 91.6%, the haze was 0.2%, the pencil hardness was 3H, the interference fringes were ×, the cracking at a bent portion (hot press forming processability) was ○, and the spring back (hot press forming processability) was O.

Comparative Production Example 11B [To Produce Resin Layered Body (I-11)]

Except that the thermoplastic resin (F-4) was used in place of the thermoplastic resin (B-1), substantially the same procedure as for the resin layered body (H-2) in Production Example 2B was repeated to produce a resin layered body (I-11) including the thermoplastic resin (F-4) and the polycarbonate-based resin (A-1). The overall thickness of a center portion of the resulting resin layered body (I-11) was 1000 μm and the thickness of the surface layer was 100 μm. In this resin layered body (I-11), the total light transmittance was 91.6%, the haze was 0.2%, the pencil hardness was 3H, the interference fringes were ×, the cracking at a bent portion (hot press forming processability) was ○, and the spring back (hot press forming processability) was O.

Comparative Production Example 12B [To Produce Resin Layered Body (I-12)]

Except that the thermoplastic resin (F-4) was used in place of the thermoplastic resin (B-1), substantially the same procedure as for the resin layered body (H-3) in Production Example 3B was repeated to produce a resin layered body (I-12) including the thermoplastic resin (F-4) and the polycarbonate-based resin (A-1). The overall thickness of a center portion of the resulting resin layered body (I-12) was 1000 μm and the thicknesses of the respective surface layers were 60 μm and 60 μm. In this resin layered body (I-12), the total light transmittance was 91.6%, the haze was 0.2%, the pencil hardness was 3H, the interference fringes were ×, the cracking at a bent portion (hot press forming processability) was ○, and the spring back (hot press forming processability) was O.

Comparative Production Example 13B [To Produce Resin Layered Body (I-13)]

Except that the thermoplastic resin (F-5) was used in place of the thermoplastic resin (B-1), substantially the same procedure as for the resin layered body (H-1) in Production Example 1B was repeated to produce a resin layered body (I-13) including the thermoplastic resin (F-5) and the polycarbonate-based resin (A-1). The overall thickness of a center portion of the resulting resin layered body (I-13) was 1000 μm and the thickness of the surface layer was 60 μm. In this resin layered body (I-13), the total light transmittance was 90.6%, the haze was 0.6%, the pencil hardness was F, the interference fringes were ○, the cracking at a bent portion (hot press forming processability) was ×, and the spring back (hot press forming processability) was O.

Comparative Production Example 14B [To Produce Resin Layered Body (I-14)]

Except that the thermoplastic resin (F-5) was used in place of the thermoplastic resin (B-1), substantially the same procedure as for the resin layered body (H-2) in Production Example 2B was repeated to produce a resin layered body (I-14) including the thermoplastic resin (F-5) and the polycarbonate-based resin (A-1). The overall thickness of a center portion of the resulting resin layered body (I-14) was 1000 μm and the thickness of the surface layer was 100 μm. In this resin layered body (I-14), the total light transmittance was 90.5%, the haze was 0.7%, the pencil hardness was H, the interference fringes were O, the cracking at a bent portion (hot press forming processability) was ×, and the spring back (hot press forming processability) was O.

Comparative Production Example 15B [To Produce Resin Layered Body (I-15)]

Except that the thermoplastic resin (F-5) was used in place of the thermoplastic resin (B-1), substantially the same procedure as for the resin layered body (H-3) in Production Example 3B was repeated to produce a resin layered body (I-15) including the thermoplastic resin (F-5) and the polycarbonate-based resin (A-1). The overall thickness of a center portion of the resulting resin layered body (I-15) was 1000 μm and the thicknesses of the respective surface layers were 60 μm and 60 μm. In this resin layered body (I-15), the total light transmittance was 90.5%, the haze was 0.7%, the pencil hardness was F, the interference fringes were O, the cracking at a bent portion (hot press forming processability) was ×, and the spring back (hot press forming processability) was O.

Comparative Production Example 16B [To Produce Resin Layered Body (I-16)]

Except that the polycarbonate-based resin (G-1) was used in place of the polycarbonate-based resin (A-1), and the mirror surface was transferred, while cooling, with three mirror finishing rolls changed to a temperature of, from the upstream side, 130°C, 140°C, or 180°C, substantially the same procedure as for the resin layered body (H-1) in Production Example 1B was repeated to produce a resin layered body (I-16) including the thermoplastic resin (B-1) and the polycarbonate-based resin (G-1). The overall thickness of a center portion of the resulting resin layered body (I-16) was 1000 μm and the thickness of the surface layer was 60 μm. In this resin layered body (I-16), the total light transmittance was 90.9%, the haze was 0.3%, the pencil hardness was H, the interference fringes were ○, the cracking at a bent portion (hot press forming processability) was ○, and the spring back (hot press forming processability) was ×.

Comparative Production Example 17B [To Produce Resin Layered Body (I-17)]

Except that the polycarbonate-based resin (G-1) was used in place of the polycarbonate-based resin (A-1), and the mirror surface was transferred, while cooling, with three mirror finishing rolls changed to a temperature of, from the upstream side, 130°C, 140°C, or 180°C, substantially the same procedure as for the resin layered body (H-2) in Production Example 2B was repeated to produce a resin layered body (I-17) including the thermoplastic resin (B-1) and the polycarbonate-based resin (G-1). The overall thickness of a center portion of the resulting resin layered body (I-17) was 1000 μm and the thickness of the surface layer was 100 μm. In this resin layered body (I-17), the total light transmittance was 90.9%, the haze was 0.5%, the pencil hardness was 2H, the interference fringes were ○, the cracking at a bent portion (hot press forming processability) was ○, and the spring back (hot press forming processability) was ×.

Comparative Production Example 18B [To Produce Resin Layered Body (I-18)]

Except that the polycarbonate-based resin (G-1) was used in place of the polycarbonate-based resin (A-1), and the mirror surface was transferred, while cooling, with three mirror finishing rolls changed to a temperature of, from the upstream side, 130°C, 140°C, or 110°C, substantially the same procedure as for the resin layered body (H-3) in Production Example 3B was repeated to produce a resin layered body (I-18) including the thermoplastic resin (B-1) and the polycarbonate-based resin (G-1). The overall thickness of a center portion of the resulting resin layered body (I-18) was 1000 μm and the thicknesses of the respective surface layers were 60 μm and 60 μm. In this resin layered body (I-18), the total light transmittance was 90.9%, the haze was 0.5%, the pencil hardness was H, the interference fringes were ○, the cracking at a bent portion (hot press forming processability) was ○, and the spring back (hot press forming processability) was ×.

Comparative Production Example 19B [To Produce Resin Layered Body (1-19)]

Except that the thermoplastic resin (B-2) was used in place of the thermoplastic resin (B-1), substantially the same procedure as for the resin layered body (I-16) in Comparative Production Example 16B was repeated to produce a resin layered body (I-19) including the thermoplastic resin (B-2) and the polycarbonate-based resin (G-1). The overall thickness of a center portion of the resulting resin layered body (I-19) was 1000 μm and the thickness of the surface layer was 60 μm. In this resin layered body (I-19), the total light transmittance was 90.7%, the haze was 0.5%, the pencil hardness was H, the interference fringes were ○, the cracking at a bent portion (hot press forming processability) was ○, and the spring back (hot press forming processability) was ×.

Comparative Production Example 20B [To Produce Resin Layered Body (I-20)]

Except that the thermoplastic resin (B-2) was used in place of the thermoplastic resin (B-1), substantially the same procedure as for the resin layered body (I-17) in Comparative Production Example 17B was repeated to produce a resin layered body (I-20) including the thermoplastic resin (B-2) and the polycarbonate-based resin (G-1). The overall thickness of a center portion of the resulting resin layered body (I-20) was 1000 μm and the thickness of the surface layer was 100 μm. In this resin layered body (I-20), the total light transmittance was 90.5%, the haze was 0.6%, the pencil hardness was H, the interference fringes were ○, the cracking at a bent portion (hot press forming processability) was ○, and the spring back (hot press forming processability) was ×.

Comparative Production Example 21B [To Produce Resin Layered Body (I-21)]

Except that the thermoplastic resin (B-2) was used in place of the thermoplastic resin (B-1), substantially the same procedure as for the resin layered body (I-18) in Comparative Production Example 18B was repeated to produce a

resin layered body (I-21) including the thermoplastic resin (B-2) and the polycarbonate-based resin (G-1). The overall thickness of a center portion of the resulting resin layered body (I-21) was 1000 μm and the thicknesses of the respective surface layers were 60 μm and 60 μm. In this resin layered body (I-21), the total light transmittance was 90.5%, the haze was 0.6%, the pencil hardness was H, the interference fringes were ○, the cracking at a bent portion (hot press forming processability) was ○, and the spring back (hot press forming processability) was ×.

Comparative Production Example 22B [To Produce Resin Layered Body (I-22)]

Except that the thermoplastic resin (B-3) was used in place of the thermoplastic resin (B-1), substantially the same procedure as for the resin layered body (I-16) in Comparative Production Example 16B was repeated to produce a resin layered body (I-22) including the thermoplastic resin (B-3) and the polycarbonate-based resin (G-1). The overall thickness of a center portion of the resulting resin layered body (I-22) was 1000 μm and the thickness of the surface layer was 60 μm. In this resin layered body (I-22), the total light transmittance was 90.9%, the haze was 0.3%, the pencil hardness was H, the interference fringes were ○, the cracking at a bent portion (hot press forming processability) was ○, and the spring back (hot press forming processability) was ×.

Comparative Production Example 23B [To Produce Resin Layered Body (I-23)]

Except that the thermoplastic resin (B-3) was used in place of the thermoplastic resin (B-1), substantially the same procedure as for the resin layered body (I-17) in Comparative Production Example 17B was repeated to produce a resin layered body (I-23) including the thermoplastic resin (B-3) and the polycarbonate-based resin (G-1). The overall thickness of a center portion of the resulting resin layered body (I-23) was 1000 μm and the thickness of the surface layer was 100 μm. In this resin layered body (I-23), the total light transmittance was 90.9%, the haze was 0.5%, the pencil hardness was 2H, the interference fringes were ○, the cracking at a bent portion (hot press forming processability) was ○, and the spring back (hot press forming processability) was ×.

Comparative Production Example 24B [To Produce Resin Layered Body (I-24)]

Except that the thermoplastic resin (B-3) was used in place of the thermoplastic resin (B-1), substantially the same procedure as for the resin layered body (I-18) in Comparative Production Example 18B was repeated to produce a resin layered body (I-24) including the thermoplastic resin (B-3) and the polycarbonate-based resin (G-1). The overall thickness of a center portion of the resulting resin layered body (I-24) was 1000 μm and the thicknesses of the respective surface layers were 60 μm and 60 μm. In this resin layered body (I-24), the total light transmittance was 90.9%, the haze was 0.5%, the pencil hardness was H, the interference fringes were ○, the cracking at a bent portion (hot press forming processability) was ○, and the spring back (hot press forming processability) was ×.

Comparative Production Example 25B [To Produce Resin Layered Body (I-25)]

Except that the thermoplastic resin (B-4) was used in place of the thermoplastic resin (B-1), substantially the same procedure as for the resin layered body (I-16) in Comparative Production Example 16B was repeated to produce a resin layered body (I-25) including the thermoplastic resin (B-4) and the polycarbonate-based resin (G-1). The overall thickness of a center portion of the resulting resin layered body (I-25) was 1000 μm and the thickness of the surface layer was 60 μm. In this resin layered body (I-25), the total light transmittance was 90.7%, the haze was 0.5%, the pencil hardness was H, the interference fringes were ○, the cracking at a bent portion (hot press forming processability) was ○, and the spring back (hot press forming processability) was ×.

Comparative Production Example 26B [To Produce Resin Layered Body (I-26)]

Except that the thermoplastic resin (B-4) was used in place of the thermoplastic resin (B-1), substantially the same procedure as for the resin layered body (I-17) in Comparative Production Example 17B was repeated to produce a resin layered body (I-26) including the thermoplastic resin (B-4) and the polycarbonate-based resin (G-1). The overall thickness of a center portion of the resulting resin layered body (I-26) was 1000 μm and the thickness of the surface layer was 100 μm. In this resin layered body (I-26), the total light transmittance was 90.5%, the haze was 0.6%, the pencil hardness was H, the interference fringes were ○, the cracking at a bent portion (hot press forming processability) was ○, and the spring back (hot press forming processability) was ×.

Comparative Production Example 27B [To Produce Resin Layered Body (I-27)]

Except that the thermoplastic resin (B-4) was used in place of the thermoplastic resin (B-1), substantially the same procedure as for the resin layered body (I-18) in Comparative Production Example 18B was repeated to produce a resin layered body (I-27) including the thermoplastic resin (B-4) and the polycarbonate-based resin (G-1). The overall thickness of a center portion of the resulting resin layered body (I-27) was 1000 μm and the thicknesses of the respective surface layers were 60 μm and 60 μm. In this resin layered body (I-27), the total light transmittance was 90.5%, the haze was 0.6%, the pencil hardness was H, the interference fringes were ○, the cracking at a bent portion (hot press forming processability) was ○, and the spring back (hot press forming processability) was ×.

Comparative Production Example 28B [To Produce Resin Layered Body (I-28)]

Except that the thermoplastic resin (F-1) was used in place of the thermoplastic resin (B-1), substantially the same procedure as for the resin layered body (I-16) in Comparative Production Example 16B was repeated to produce a resin layered body (I-28) including the thermoplastic resin (F-1) and the polycarbonate-based resin (G-1). The overall thickness of a center portion of the resulting resin layered body (I-28) was 1000 μm and the thickness of the surface layer was 60 μm. In this resin layered body (I-28), the total light transmittance was 91.2%, the haze was 0.5%, the pencil hardness was 2H, the interference fringes were O, the cracking at a bent portion (hot press forming processability) was ○, and the spring back (hot press forming processability) was ×.

Comparative Production Example 29B [To Produce Resin Layered Body (I-29)]

Except that the thermoplastic resin (F-1) was used in place of the thermoplastic resin (B-1), substantially the same procedure as for the resin layered body (I-17) in Comparative Production Example 17B was repeated to produce a resin layered body (I-29) including the thermoplastic resin (F-1) and the polycarbonate-based resin (G-1). The overall thickness of a center portion of the resulting resin layered body (I-29) was 1000 μm and the thickness of the surface layer was 100 μm. In this resin layered body (I-29), the total light transmittance was 91.1%, the haze was 0.6%, the pencil hardness was 2H, the interference fringes were O, the cracking at a bent portion (hot press forming processability) was ○, and the spring back (hot press forming processability) was ×.

Comparative Production Example 30B [To Produce Resin Layered Body (I-30)]

Except that the thermoplastic resin (F-1) was used in place of the thermoplastic resin (B-1), substantially the same procedure as for the resin layered body (I-18) in Comparative Production Example 18B was repeated to produce a resin layered body (I-30) including the thermoplastic resin (F-1) and the polycarbonate-based resin (G-1). The overall thickness of a center portion of the resulting resin layered body (I-30) was 1000 μm and the thicknesses of the respective surface layers were 60 μm and 60 μm. In this resin layered body (I-30), the total light transmittance was 91.1%, the haze was 0.6%, the pencil hardness was 2H, the interference fringes were O, the cracking at a bent portion (hot press forming processability) was ○, and the spring back (hot press forming processability) was ×.

Comparative Production Example 31B [To Produce Resin Layered Body (I-31)]

Except that the thermoplastic resin (F-2) was used in place of the thermoplastic resin (B-1), substantially the same procedure as for the resin layered body (I-16) in Comparative Production Example 16B was repeated to produce a resin layered body (I-31) including the thermoplastic resin (F-2) and the polycarbonate-based resin (G-1). The overall thickness of a center portion of the resulting resin layered body (I-31) was 1000 μm and the thickness of the surface layer was 60 μm. In this resin layered body (I-31), the total light transmittance was 91.2%, the haze was 0.5%, the pencil hardness was 2H, the interference fringes were ○, the cracking at a bent portion (hot press forming processability) was ○, and the spring back (hot press forming processability) was ×.

Comparative Production Example 32B [To Produce Resin Layered Body (I-32)]

Except that the thermoplastic resin (F-2) was used in place of the thermoplastic resin (B-1), substantially the same procedure as for the resin layered body (I-17) in Comparative Production Example 17B was repeated to produce a resin layered body (I-32) including the thermoplastic resin (F-2) and the polycarbonate-based resin (G-1). The overall thickness of a center portion of the resulting resin layered body (I-32) was 1000 μm and the thickness of the surface layer was 100 μm. In this resin layered body (I-32), the total light transmittance was 91.1%, the haze was 0.6%, the pencil hardness was 2H, the interference fringes were ○, the cracking at a bent portion (hot press forming processability) was ○,

and the spring back (hot press forming processability) was ×.

Comparative Production Example 33B [To Produce Resin Layered Body (I-33)]

Except that the thermoplastic resin (F-2) was used in place of the thermoplastic resin (B-1), substantially the same procedure as for the resin layered body (I-18) in Comparative Production Example 18B was repeated to produce a resin layered body (I-33) including the thermoplastic resin (F-2) and the polycarbonate-based resin (G-1). The overall thickness of a center portion of the resulting resin layered body (I-33) was 1000 μm and the thicknesses of the respective surface layers were 60 μm and 60 μm. In this resin layered body (I-33), the total light transmittance was 91.1%, the haze was 0.6%, the pencil hardness was 2H, the interference fringes were O, the cracking at a bent portion (hot press forming processability) was ○, and the spring back (hot press forming processability) was ×.

Comparative Production Example 34B [To Produce Resin Layered Body (I-34)]

Except that the thermoplastic resin (F-3) was used in place of the thermoplastic resin (B-1), substantially the same procedure as for the resin layered body (I-16) in Comparative Production Example 16B was repeated to produce a resin layered body (I-34) including the thermoplastic resin (F-3) and the polycarbonate-based resin (G-1). The overall thickness of a center portion of the resulting resin layered body (I-34) was 1000 μm and the thickness of the surface layer was 60 μm. In this resin layered body (I-34), the total light transmittance was 91.6%, the haze was 0.2%, the pencil hardness was 3H, the interference fringes were ×, the cracking at a bent portion (hot press forming processability) was ○, and the spring back (hot press forming processability) was ×.

Comparative Production Example 35B [To Produce Resin Layered Body (I-35)]

Except that the thermoplastic resin (F-3) was used in place of the thermoplastic resin (B-1), substantially the same procedure as for the resin layered body (I-17) in Comparative Production Example 17B was repeated to produce a resin layered body (I-35) including the thermoplastic resin (F-3) and the polycarbonate-based resin (G-1). The overall thickness of a center portion of the resulting resin layered body (I-35) was 1000 μm and the thickness of the surface layer was 100 μm. In this resin layered body (I-35), the total light transmittance was 91.6%, the haze was 0.2%, the pencil hardness was 3H, the interference fringes were ×, the cracking at a bent portion (hot press forming processability) was ○, and the spring back (hot press forming processability) was ×.

Comparative Production Example 36B [To Produce Resin Layered Body (I-36)]

Except that the thermoplastic resin (F-3) was used in place of the thermoplastic resin (B-1), substantially the same procedure as for the resin layered body (I-18) in Comparative Production Example 18B was repeated to produce a resin layered body (I-36) including the thermoplastic resin (F-3) and the polycarbonate-based resin (G-1). The overall thickness of a center portion of the resulting resin layered body (I-36) was 1000 μm and the thicknesses of the respective surface layers were 60 μm and 60 μm. In this resin layered body (I-36), the total light transmittance was 91.6%, the haze was 0.2%, the pencil hardness was 3H, the interference fringes were ×, the cracking at a bent portion (hot press forming processability) was ○, and the spring back (hot press forming processability) was ×.

Comparative Production Example 37B [To Produce Resin Layered Body (I-37)]

Except that the thermoplastic resin (F-4) was used in place of the thermoplastic resin (B-1), substantially the same procedure as for the resin layered body (I-16) in Comparative Production Example 16B was repeated to produce a resin layered body (I-37) including the thermoplastic resin (F-4) and the polycarbonate-based resin (G-1). The overall thickness of a center portion of the resulting resin layered body (I-37) was 1000 μm and the thickness of the surface layer was 60 μm. In this resin layered body (I-37), the total light transmittance was 91.6%, the haze was 0.2%, the pencil hardness was 3H, the interference fringes were ×, the cracking at a bent portion (hot press forming processability) was ○, and the spring back (hot press forming processability) was ×.

Comparative Production Example 38B [To Produce Resin Layered Body (I-38)]

Except that the thermoplastic resin (F-4) was used in place of the thermoplastic resin (B-1), substantially the same procedure as for the resin layered body (I-17) in Comparative Production Example 17B was repeated to produce a resin layered body (I-38) including the thermoplastic resin (F-4) and the polycarbonate-based resin (G-1). The overall thickness of a center portion of the resulting resin layered body (I-38) was 1000 μm and the thickness of the surface layer

was 100 μm. In this resin layered body (I-38), the total light transmittance was 91.6%, the haze was 0.2%, the pencil hardness was 3H, the interference fringes were ×, the cracking at a bent portion (hot press forming processability) was ○, and the spring back (hot press forming processability) was ×.

Comparative Production Example 39B [To Produce Resin Layered Body (I-39)]

Except that the thermoplastic resin (F-4) was used in place of the thermoplastic resin (B-1), substantially the same procedure as for the resin layered body (I-18) in Comparative Production Example 18B was repeated to produce a resin layered body (I-39) including the thermoplastic resin (F-4) and the polycarbonate-based resin (G-1). The overall thickness of a center portion of the resulting resin layered body (I-39) was 1000 μm and the thicknesses of the respective surface layers were 60 μm and 60 μm. In this resin layered body (I-39), the total light transmittance was 91.6%, the haze was 0.2%, the pencil hardness was 3H, the interference fringes were ×, the cracking at a bent portion (hot press forming processability) was ○, and the spring back (hot press forming processability) was ×.

Comparative Production Example 40B [To Produce Resin Layered Body (1-40)]

Except that the thermoplastic resin (F-5) was used in place of the thermoplastic resin (B-1), substantially the same procedure as for the resin layered body (I-16) in Comparative Production Example 16B was repeated to produce a resin layered body (I-40) including the thermoplastic resin (F-5) and the polycarbonate-based resin (G-1). The overall thickness of a center portion of the resulting resin layered body (I-40) was 1000 μm and the thickness of the surface layer was 60 μm. In this resin layered body (I-40), the total light transmittance was 90.6%, the haze was 0.6%, the pencil hardness was F, the interference fringes were ○, the cracking at a bent portion (hot press forming processability) was ×, and the spring back (hot press forming processability) was ×.

Comparative Production Example 41B [To Produce Resin Layered Body (I-41)]

Except that the thermoplastic resin (F-5) was used in place of the thermoplastic resin (B-1), substantially the same procedure as for the resin layered body (I-17) in Comparative Production Example 17B was repeated to produce a resin layered body (I-41) including the thermoplastic resin (F-5) and the polycarbonate-based resin (G-1). The overall thickness of a center portion of the resulting resin layered body (I-41) was 1000 μm and the thickness of the surface layer was 100 μm. In this resin layered body (I-41), the total light transmittance was 90.5%, the haze was 0.7%, the pencil hardness was H, the interference fringes were ○, the cracking at a bent portion (hot press forming processability) was ×, and the spring back (hot press forming processability) was ×.

Comparative Production Example 42B [To Produce Resin Layered Body (I-42)]

Except that the thermoplastic resin (F-5) was used in place of the thermoplastic resin (B-1), substantially the same procedure as for the resin layered body (I-18) in Comparative Production Example 18B was repeated to produce a resin layered body (I-42) including the thermoplastic resin (F-5) and the polycarbonate-based resin (G-1). The overall thickness of a center portion of the resulting resin layered body (I-42) was 1000 μm and the thicknesses of the respective surface layers were 60 μm and 60 μm. In this resin layered body (I-42), the total light transmittance was 90.5%, the haze was 0.7%, the pencil hardness was F, the interference fringes were ○, the cracking at a bent portion (hot press forming processability) was ×, and the spring back (hot press forming processability) was ×.

[Table 3]

Table 3

| Example | Before hard coating application | | | | | | | | |
|---|---|---|---|---|---|---|---|---|---|
| | Resin layered body | Layer structure | Thickness B or F / A or G (/ B or F) [μm] | Total light transmittance [%] | Haze [%] | Pencil hardness on a surface of thermoplastic resin B or F | Interference fringes | Hot press forming processability | |
| | | | | | | | | Cracking at a bent portion | Spring back |
| Production Example 1B | H-1 | B-1/A-1 | 60/940 | 90.9 | 0.3 | H | ○ | ○ | ○ |
| Production Example 2B | H-2 | B-1/A-1 | 100/900 | 90.9 | 0.5 | 2H | ○ | ○ | ○ |
| Production Example 3B | H-3 | B-1/A-1/B-1 | 60/880(/60) | 90.9 | 0.5 | H | ○ | ○ | ○ |
| Production Example 4B | H-4 | B-2/A-1 | 60/940 | 90.7 | 0.5 | H | ○ | ○ | ○ |
| Production Example 5B | H-5 | B-2/A-1 | 100/900 | 90.5 | 0.6 | H | ○ | ○ | ○ |
| Production Example 6B | H-6 | B-2/A-1/B-2 | 60/880(/60) | 90.5 | 0.6 | H | ○ | ○ | ○ |
| Production Example 7B | H-7 | B-3/A-1 | 60/940 | 90.9 | 0.3 | H | ○ | ○ | ○ |
| Production Example 8B | H-8 | B-3/A-1 | 60/940 | 90.9 | 0.5 | 2H | ○ | ○ | ○ |
| Production Example 9B | H-9 | B-3/A-1/B-3 | 60/880(/60) | 90.9 | 0.5 | H | ○ | ○ | ○ |
| Production Example 10B | H-10 | B-4/A-1 | 60/940 | 90.7 | 0.5 | H | ○ | ○ | ○ |
| Production Example 118 | H-11 | B-4/A-1 | 100/900 | 90.5 | 0.6 | H | ○ | ○ | ○ |
| Production Example 12B | H-12 | B-4/A-1/B-4 | 60/880(/60) | 90.5 | 0.6 | H | ○ | ○ | ○ |
| Comparative Production Example 1B | I-1 | F-1/A-1 | 60/940 | 91.2 | 0.5 | 2H | ○ | ○ | ○ |
| Comparative Production Example 2B | I-2 | F-1/A-1 | 100/900 | 91.1 | 0.6 | 2H | ○ | ○ | ○ |
| Comparative Production Example 3B | I-3 | F-1/A-1/F-1 | 60/880(/60) | 91.1 | 0.6 | 2H | ○ | ○ | ○ |
| Comparative Production Example 4B | I-4 | F-2/A-1 | 60/940 | 91.2 | 0.5 | 2H | ○ | ○ | ○ |
| Comparative Production Example 5B | I-5 | F-2/A-1 | 100/900 | 91.1 | 0.6 | 2H | ○ | ○ | ○ |
| Comparative Production Example 6B | I-6 | F-2/A-1/F-2 | 60/880(/60) | 91.1 | 0.6 | 2H | ○ | ○ | ○ |
| Comparative Production Example 7B | I-7 | F-3/A-1 | 60/940 | 91.6 | 0.2 | 3H | × | ○ | ○ |
| Comparative Production Example 8B | I-8 | F-3/A-1 | 100/900 | 91.6 | 0.2 | 3H | × | ○ | ○ |
| Comparative Production Example 9B | I-9 | F-3/A-1/F-3 | 60/880(/60) | 91.6 | 0.2 | 3H | × | ○ | ○ |

(continued)

| Example | Before hard coating application | | | | | | | | |
|---|---|---|---|---|---|---|---|---|---|
| | Resin layered body | Layer structure | Thickness B or F / A or G (/ B or F) [μm] | Total light transmittance [%] | Haze [%] | Pencil hardness on a surface of thermoplastic resin B or F | Interference fringes | Hot press forming processability | |
| | | | | | | | | Cracking at a bent portion | Spring back |
| Comparative Production Example 10B | I-10 | F-4/A-1 | 60/940 | 91.6 | 0.2 | 3H | × | ○ | ○ |
| Comparative Production Example 11B | I-11 | F-4/A-1 | 100/900 | 91.6 | 0.2 | 3H | × | ○ | ○ |
| Comparative Production Example 12B | I-12 | F-4/A-1/F-4 | 60/880(/60) | 91.6 | 0.2 | 3H | × | ○ | ○ |
| Comparative Production Example 13B | I-13 | F-5/A-1 | 60/940 | 90.6 | 0.6 | F | ○ | × | ○ |
| Comparative Production Example 14B | I-14 | F-5/A-1 | 100/900 | 90.5 | 0.7 | H | ○ | × | ○ |
| Comparative Production Example 15B | I-15 | F-5/A-1/F-5 | 60/880(160) | 90.5 | 0.7 | F | ○ | × | ○ |
| Comparative Production Example 16B | I-16 | B-1/G-1 | 60/940 | 90.9 | 0.3 | H | ○ | ○ | × |
| Comparative Production Example 17B | I-17 | B-1/G-1 | 100/900 | 90.9 | 0.5 | 2H | ○ | ○ | × |
| Comparative Production Example 18B | I-18 | B-1/G-1/B-1 | 60/880(/60) | 90.9 | 0.5 | H | ○ | ○ | × |
| Comparative Production Example 19B | I-19 | B-2/G-1 | 60/940 | 90.7 | 0.5 | H | ○ | ○ | × |
| Comparative Production Example 20B | I-20 | B-2/G-1 | 100/900 | 90.5 | 0.6 | H | ○ | ○ | × |
| Comparative Production Example 21B | I-21 | B-2/G-1/B-2 | 60/880(/60) | 90.5 | 0.6 | H | ○ | ○ | × |
| Comparative Production Example 22B | I-22 | B-3/G-1 | 60/940 | 90.9 | 0.3 | H | ○ | ○ | × |
| Comparative Production Example 23B | I-23 | B-3/G-1 | 100/900 | 90.9 | 0.5 | 2H | ○ | ○ | × |
| Comparative Production Example 24B | I-24 | 8-3/G-1/B-3 | 60/880(/60) | 90.9 | 0.5 | H | ○ | ○ | × |
| Comparative Production Example 25B | I-25 | B-4/G-1 | 60/940 | 90.7 | 0.5 | H | ○ | ○ | × |
| Comparative Production Example 26B | I-26 | B-4/G-1 | 100/900 | 90.5 | 0.6 | H | ○ | ○ | × |
| Comparative Production Example 27B | I-27 | B-4/G-1/8-4 | 60/880(/60) | 90.5 | 0.6 | H | ○ | ○ | × |
| Comparative Production Example 28B | I-28 | F-1/G-1 | 60/940 | 91.2 | 0.5 | 2H | ○ | ○ | × |
| Comparative Production Example 29B | I-29 | F-1/G-1 | 100/900 | 91.1 | 0.6 | 2H | ○ | ○ | × |
| Comparative Production Example 30B | I-30 | F-1/G-1/F-1 | 60/880(/60) | 91.1 | 0.6 | 2H | ○ | ○ | × |
| Comparative Production Example 31B | I-31 | F-2/G-1 | 60/940 | 91.2 | 0.5 | 2H | ○ | ○ | × |

(continued)

| Example | Before hard coating application | | | | | | | | |
|---|---|---|---|---|---|---|---|---|---|
| | Resin layered body | Layer structure | Thickness B or F / A or G (/ B or F) [μm] | Total light transmittance [%] | Haze [%] | Pencil hardness on a surface of thermoplastic resin B or F | Interference fringes | Hot press forming processability | |
| | | | | | | | | Cracking at a bent portion | Spring back |
| Comparative Production Example 32B | I-32 | F-2/G-1 | 100/900 | 91.1 | 0.6 | 2H | ○ | ○ | × |
| Comparative Production Example 33B | I-33 | F-2/G-1/F-2 | 60/880(/60) | 91.1 | 0.6 | 2H | ○ | ○ | × |
| Comparative Production Example 34B | I-34 | F-3/G-1 | 60/940 | 91.6 | 0.2 | 3H | × | ○ | × |
| Comparative Production Example 35B | I-35 | F-3/G-1 | 100/900 | 91.6 | 0.2 | 3H | × | ○ | × |
| Comparative Production Example 36B | I-36 | F-3/G-1/F-3 | 60/880(/60) | 91.6 | 0.2 | 3H | × | ○ | × |
| Comparative Production Example 37B | I-37 | F-4/G-1 | 60/940 | 91.6 | 0.2 | 3H | × | ○ | × |
| Comparative Production Example 38B | I-38 | F-4/G-1 | 100/900 | 91.6 | 0.2 | 3H | × | ○ | × |
| Comparative Production Example 39B | I-39 | F-4/G-1/F-4 | 60/880(/60) | 91.6 | 0.2 | 3H | × | ○ | × |
| Comparative Production Example 40B | I-40 | F-5/G-1 | 60/940 | 90.6 | 0.6 | F | ○ | × | × |
| Comparative Production Example 41B | I-41 | F-5/G-1 | 100/900 | 90.5 | 0.7 | H | ○ | × | × |
| Comparative Production Example 42B | I-42 | F-5/G-1/F-5 | 60/880(/60) | 90.5 | 0.7 | F | ○ | × | × |

Example 1 [To Produce Resin Layered Body (K-1)]

To 100 parts by mass of the total of 60 parts by mass of hexa-functional urethane acrylate oligomer (trade name: U6HA, manufactured by SHIN-NAKAMURA CHEMICAL CO, LTD.), 35 parts by mass of PEG200# diacrylate (trade name: 4EG-A, manufactured by Kyoeisha Chemical Co., Ltd.), and 5 parts by mass of fluorine group-, hydrophilic group-, lipophilic group-, and UV reactive groupcontaining oligomer (trade name: RS-90, manufactured by DIC Inc.) was added 1 mass% of photopolymerization initiator (trade name: I-184 [chemical name: 1-hydroxy-cyclohexylphenylketone], manufactured by BASF Inc.) to prepare a coating material. The coating material was applied with a bar coater onto a surface of thermoplastic resin (B-1) of the resin layered body (H-1) obtained in Production Example 1B. The hard coating was cured by irradiation using a metal halide lamp (20 mW/cm$^2$) for 5 s to produce a resin layered body (K-1). The film thickness of the hard coating layer (J-1) was 6 μm.

In this resin layered body (K-1), the total light transmittance was 90.8%, the haze was 0.3%, the pencil hardness was 3H, the interference fringes were O, the cracking at a bent portion (hot press forming processability) was ○, and the spring back (hot press forming processability) was O.

Example 2 [To Produce Resin Layered Body (K-2)]

The same coating material as in Example 1 was applied with a bar coater onto a surface of thermoplastic resin (B-1) of the resin layered body (H-2) obtained in Production Example 2B, and the hard coating was cured likewise in Example 1 to produce a resin layered body (K-2). The film thickness of the hard coating layer (J-1) was 6 μm.

In this resin layered body (K-2), the total light transmittance was 90.8%, the haze was 0.5%, the pencil hardness was 3H, the interference fringes were ○, the cracking at a bent portion (hot press forming processability) was ○, and the spring back (hot press forming processability) was O.

Example 3 [To Produce Resin Layered Body (K-3)]

The same coating material as in Example 1 was applied with a bar coater onto a surface of thermoplastic resin (B-1) on one side of the resin layered body (H-3) obtained in Production Example 3B, and the hard coating was cured likewise in Example 1 to produce a resin layered body (K-3). The film thickness of the hard coating layer (J-1) was 6 μm.

In this resin layered body (K-3), the total light transmittance was 90.8%, the haze was 0.5%, the pencil hardness was 3H, the interference fringes were O, the cracking at a bent portion (hot press forming processability) was ○, and the spring back (hot press forming processability) was O.

Example 4 [To Produce Resin Layered Body (K-4)]

The same coating material as in Example 1 was applied with a bar coater onto a surface of thermoplastic resin (B-2) of the resin layered body (H-4) obtained in Production Example 4B, and the hard coating was cured likewise in Example 1 to produce a resin layered body (K-4). The film thickness of the hard coating layer (J-1) was 6 μm.

In this resin layered body (K-4), the total light transmittance was 90.6%, the haze was 0.5%, the pencil hardness was 2H, the interference fringes were O, the cracking at a bent portion (hot press forming processability) was ○, and the spring back (hot press forming processability) was O.

Example 5 [To Produce Resin Layered Body (K-5)]

The same coating material as in Example 1 was applied with a bar coater onto a surface of thermoplastic resin (B-2) of the resin layered body (H-5) obtained in Production Example 5B, and the hard coating was cured likewise in Example 1 to produce a resin layered body (K-5). The film thickness of the hard coating layer (J-1) was 6 μm.

In this resin layered body (K-5), the total light transmittance was 90.4%, the haze was 0.6%, the pencil hardness was 3H, the interference fringes were ○, the cracking at a bent portion (hot press forming processability) was ○, and the spring back (hot press forming processability) was O.

Example 6 [To Produce Resin Layered Body (K-6)]

The same coating material as in Example 1 was applied with a bar coater onto a surface of thermoplastic resin (B-2) on one side of the resin layered body (H-6) obtained in Production Example 6B, and the hard coating was cured likewise in Example 1 to produce a resin layered body (K-6). The film thickness of the hard coating layer (J-1) was 6 μm.

In this resin layered body (K-6), the total light transmittance was 90.4%, the haze was 0.6%, the pencil hardness was 2H, the interference fringes were O, the cracking at a bent portion (hot press forming processability) was ○, and the

spring back (hot press forming processability) was O.

Example 7 [To Produce Resin Layered Body (K-7)]

The same coating material as in Example 1 was applied with a bar coater onto a surface of thermoplastic resin (B-3) of the resin layered body (H-7) obtained in Production Example 7B, and the hard coating was cured likewise in Example 1 to produce a resin layered body (K-7). The film thickness of the hard coating layer (J-1) was 6 μm.
In this resin layered body (K-7), the total light transmittance was 90.8%, the haze was 0.3%, the pencil hardness was 3H, the interference fringes were ○, the cracking at a bent portion (hot press forming processability) was ○, and the spring back (hot press forming processability) was ○.

Example 8 [To Produce Resin Layered Body (K-8)]

The same coating material as in Example 1 was applied with a bar coater onto a surface of thermoplastic resin (B-3) of the resin layered body (H-8) obtained in Production Example 8B, and the hard coating was cured likewise in Example 1 to produce a resin layered body (K-8). The film thickness of the hard coating layer (J-1) was 6 μm.
In this resin layered body (K-8), the total light transmittance was 90.8%, the haze was 0.5%, the pencil hardness was 3H, the interference fringes were ○, the cracking at a bent portion (hot press forming processability) was ○, and the spring back (hot press forming processability) was O.

Example 9 [To Produce Resin Layered Body (K-9)]

The same coating material as in Example 1 was applied with a bar coater onto a surface of thermoplastic resin (B-3) on one side of the resin layered body (H-9) obtained in Production Example 9B, and the hard coating was cured likewise in Example 1 to produce a resin layered body (K-9). The film thickness of the hard coating layer (J-1) was 6 μm.
In this resin layered body (K-9), the total light transmittance was 90.8%, the haze was 0.5%, the pencil hardness was 3H, the interference fringes were ○, the cracking at a bent portion (hot press forming processability) was ○, and the spring back (hot press forming processability) was ○.

Example 10 [To Produce Resin Layered Body (K-10)]

The same coating material as in Example 1 was applied with a bar coater onto a surface of thermoplastic resin (B-4) of the resin layered body (H-10) obtained in Production Example 10B, and the hard coating was cured likewise in Example 1 to produce a resin layered body (K-10). The film thickness of the hard coating layer (J-1) was 6 μm.
In this resin layered body (K-10), the total light transmittance was 90.6%, the haze was 0.5%, the pencil hardness was 2H, the interference fringes were ○, the cracking at a bent portion (hot press forming processability) was ○, and the spring back (hot press forming processability) was O.

Example 11 [To Produce Resin Layered Body (K-11)]

The same coating material as in Example 1 was applied with a bar coater onto a surface of thermoplastic resin (B-4) of the resin layered body (H-11) obtained in Production Example 11B, and the hard coating was cured likewise in Example 1 to produce a resin layered body (K-11). The film thickness of the hard coating layer (J-1) was 6 μm.
In this resin layered body (K-11), the total light transmittance was 90.4%, the haze was 0.6%, the pencil hardness was 3H, the interference fringes were O, the cracking at a bent portion (hot press forming processability) was ○, and the spring back (hot press forming processability) was O.

Example 12 [To Produce Resin Layered Body (K-12)]

The same coating material as in Example 1 was applied with a bar coater onto a surface of thermoplastic resin (B-4) on one side of the resin layered body (H-12) obtained in Production Example 12B, and the hard coating was cured likewise in Example 1 to produce a resin layered body (K-12). The film thickness of the hard coating layer (J-1) was 6 μm.
In this resin layered body (K-12), the total light transmittance was 90.4%, the haze was 0.6%, the pencil hardness was 2H, the interference fringes were O, the cracking at a bent portion (hot press forming processability) was ○, and the spring back (hot press forming processability) was O.

Comparative Example 1 [To Produce Resin Layered Body (L-1)]

The same coating material as in Example 1 was applied with a bar coater onto a surface of thermoplastic resin (F-1) of the resin layered body (I-1) obtained in Comparative Production Example 1B, and the hard coating was cured likewise in Example 1 to produce a resin layered body (L-1). The film thickness of the hard coating layer (J-1) was 6 μm.

In this resin layered body (L-1), the total light transmittance was 91.1%, the haze was 0.5%, the pencil hardness was 3H, the interference fringes were ○, the cracking at a bent portion (hot press forming processability) was ×, and the spring back (hot press forming processability) was O.

Comparative Example 2 [To Produce Resin Layered Body (L-2)]

The same coating material as in Example 1 was applied with a bar coater onto a surface of thermoplastic resin (F-1) of the resin layered body (I-2) obtained in Comparative Production Example 2B, and the hard coating was cured likewise in Example 1 to produce a resin layered body (L-2). The film thickness of the hard coating layer (J-1) was 6 μm.

In this resin layered body (L-2), the total light transmittance was 91.0%, the haze was 0.6%, the pencil hardness was 4H, the interference fringes were ○, the cracking at a bent portion (hot press forming processability) was ×, and the spring back (hot press forming processability) was O.

Comparative Example 3 [To Produce Resin Layered Body (L-3)]

The same coating material as in Example 1 was applied with a bar coater onto a surface of thermoplastic resin (F-1) on one side of the resin layered body (I-3) obtained in Comparative Production Example 3B, and the hard coating was cured likewise in Example 1 to produce a resin layered body (L-3). The film thickness of the hard coating layer (J-1) was 6 μm.

In this resin layered body (L-3), the total light transmittance was 91.0%, the haze was 0.6%, the pencil hardness was 3H, the interference fringes were ○, the cracking at a bent portion (hot press forming processability) was ×, and the spring back (hot press forming processability) was O.

Comparative Example 4 [To Produce Resin Layered Body (L-4)]

The same coating material as in Example 1 was applied with a bar coater onto a surface of thermoplastic resin (F-2) of the resin layered body (I-4) obtained in Comparative Production Example 4B, and the hard coating was cured likewise in Example 1 to produce a resin layered body (L-4). The film thickness of the hard coating layer (J-1) was 6 μm.

In this resin layered body (L-4), the total light transmittance was 91.1%, the haze was 0.5%, the pencil hardness was 3H, the interference fringes were ○, the cracking at a bent portion (hot press forming processability) was ×, and the spring back (hot press forming processability) was O.

Comparative Example 5 [To Produce Resin Layered Body (L-5)]

The same coating material as in Example 1 was applied with a bar coater onto a surface of thermoplastic resin (F-2) of the resin layered body (I-5) obtained in Comparative Production Example 5B, and the hard coating was cured likewise in Example 1 to produce a resin layered body (L-5). The film thickness of the hard coating layer (J-1) was 6 μm.

In this resin layered body (L-5), the total light transmittance was 91.0%, the haze was 0.6%, the pencil hardness was 4H, the interference fringes were ○, the cracking at a bent portion (hot press forming processability) was ×, and the spring back (hot press forming processability) was O.

Comparative Example 6 [To Produce Resin Layered Body (L-6)]

The same coating material as in Example 1 was applied with a bar coater onto a surface of thermoplastic resin (F-2) on one side of the resin layered body (I-6) obtained in Comparative Production Example 6B, and the hard coating was cured likewise in Example 1 to produce a resin layered body (L-6). The film thickness of the hard coating layer (J-1) was 6 μm.

In this resin layered body (L-6), the total light transmittance was 91.0%, the haze was 0.6%, the pencil hardness was 3H, the interference fringes were ○, the cracking at a bent portion (hot press forming processability) was ×, and the spring back (hot press forming processability) was O.

Comparative Example 7 [To Produce Resin Layered Body (L-7)]

The same coating material as in Example 1 was applied with a bar coater onto a surface of thermoplastic resin (F-3) of the resin layered body (I-7) obtained in Comparative Production Example 7B, and the hard coating was cured likewise in Example 1 to produce a resin layered body (L-7). The film thickness of the hard coating layer (J-1) was 6 μm.
In this resin layered body (L-7), the total light transmittance was 91.5%, the haze was 0.2%, the pencil hardness was 4H, the interference fringes were ×, the cracking at a bent portion (hot press forming processability) was ×, and the spring back (hot press forming processability) was O.

Comparative Example 8 [To Produce Resin Layered Body (L-8)]

The same coating material as in Example 1 was applied with a bar coater onto a surface of thermoplastic resin (F-3) of the resin layered body (I-8) obtained in Comparative Production Example 8B, and the hard coating was cured likewise in Example 1 to produce a resin layered body (L-8). The film thickness of the hard coating layer (J-1) was 6 μm.
In this resin layered body (L-8), the total light transmittance was 91.5%, the haze was 0.2%, the pencil hardness was 4H, the interference fringes were ×, the cracking at a bent portion (hot press forming processability) was ×, and the spring back (hot press forming processability) was O.

Comparative Example 9 [To Produce Resin Layered Body (L-9)]

The same coating material as in Example 1 was applied with a bar coater onto a surface of thermoplastic resin (F-3) on one side of the resin layered body (I-9) obtained in Comparative Production Example 9B, and the hard coating was cured likewise in Example 1 to produce a resin layered body (L-9). The film thickness of the hard coating layer (J-1) was 6 μm.
In this resin layered body (L-9), the total light transmittance was 91.5%, the haze was 0.2%, the pencil hardness was 4H, the interference fringes were ×, the cracking at a bent portion (hot press forming processability) was ×, and the spring back (hot press forming processability) was O.

Comparative Example 10 [To Produce Resin Layered Body (L-10)]

The same coating material as in Example 1 was applied with a bar coater onto a surface of thermoplastic resin (F-4) of the resin layered body (I-10) obtained in Comparative Production Example 10B, and the hard coating was cured likewise in Example 1 to produce a resin layered body (L-10). The film thickness of the hard coating layer (J-1) was 6 μm.
In this resin layered body (L-10), the total light transmittance was 91.5%, the haze was 0.2%, the pencil hardness was 4H, the interference fringes were ×, the cracking at a bent portion (hot press forming processability) was ×, and the spring back (hot press forming processability) was O.

Comparative Example 11 [To Produce Resin Layered Body (L-11)]

The same coating material as in Example 1 was applied with a bar coater onto a surface of thermoplastic resin (F-4) of the resin layered body (I-11) obtained in Comparative Production Example 11B, and the hard coating was cured likewise in Example 1 to produce a resin layered body (L-11). The film thickness of the hard coating layer (J-1) was 6 μm.
In this resin layered body (L-11), the total light transmittance was 91.5%, the haze was 0.2%, the pencil hardness was 4H, the interference fringes were ×, the cracking at a bent portion (hot press forming processability) was ×, and the spring back (hot press forming processability) was O.

Comparative Example 12 [To Produce Resin Layered Body (L-12)]

The same coating material as in Example 1 was applied with a bar coater onto a surface of thermoplastic resin (F-4) on one side of the resin layered body (I-12) obtained in Comparative Production Example 12B, and the hard coating was cured likewise in Example 1 to produce a resin layered body (L-12). The film thickness of the hard coating layer (J-1) was 6 μm.
In this resin layered body (L-12), the total light transmittance was 91.5%, the haze was 0.2%, the pencil hardness was 4H, the interference fringes were ×, the cracking at a bent portion (hot press forming processability) was ×, and the spring back (hot press forming processability) was O.

Comparative Example 13 [To Produce Resin Layered Body (L-13)]

The same coating material as in Example 1 was applied with a bar coater onto a surface of thermoplastic resin (F-5) of the resin layered body (I-13) obtained in Comparative Production Example 13B, and the hard coating was cured likewise in Example 1 to produce a resin layered body (L-13). The film thickness of the hard coating layer (J-1) was 6 μm.
In this resin layered body (L-13), the total light transmittance was 90.5%, the haze was 0.6%, the pencil hardness was H, the interference fringes were ○, the cracking at a bent portion (hot press forming processability) was ×, and the spring back (hot press forming processability) was O.

Comparative Example 14 [To Produce Resin Layered Body (L-14)]

The same coating material as in Example 1 was applied with a bar coater onto a surface of thermoplastic resin (F-5) of the resin layered body (I-14) obtained in Comparative Production Example 14B, and the hard coating was cured likewise in Example 1 to produce a resin layered body (L-14). The film thickness of the hard coating layer (J-1) was 6 μm.
In this resin layered body (L-14), the total light transmittance was 90.4%, the haze was 0.7%, the pencil hardness was 2H, the interference fringes were ○, the cracking at a bent portion (hot press forming processability) was ×, and the spring back (hot press forming processability) was O.

Comparative Example 15 [To Produce Resin Layered Body (L-15)]

The same coating material as in Example 1 was applied with a bar coater onto a surface of thermoplastic resin (F-5) on one side of the resin layered body (I-15) obtained in Comparative Production Example 15B, and the hard coating was cured likewise in Example 1 to produce a resin layered body (L-15). The film thickness of the hard coating layer (J-1) was 6 μm.
In this resin layered body (L-15), the total light transmittance was 90.4%, the haze was 0.7%, the pencil hardness was H, the interference fringes were ○, the cracking at a bent portion (hot press forming processability) was ×, and the spring back (hot press forming processability) was O.

Comparative Example 16 [To Produce Resin Layered Body (L-16)]

The same coating material as in Example 1 was applied with a bar coater onto a surface of thermoplastic resin (B-1) of the resin layered body (I-16) obtained in Comparative Production Example 16B, and the hard coating was cured likewise in Example 1 to produce a resin layered body (L-16). The film thickness of the hard coating layer (J-1) was 6 μm.
In this resin layered body (L-16), the total light transmittance was 90.8%, the haze was 0.3%, the pencil hardness was 3H, the interference fringes were ○, the cracking at a bent portion (hot press forming processability) was ○, and the spring back (hot press forming processability) was ×.

Comparative Example 17 [To Produce Resin Layered Body (L-17)]

The same coating material as in Example 1 was applied with a bar coater onto a surface of thermoplastic resin (B-1) of the resin layered body (I-17) obtained in Comparative Production Example 17B, and the hard coating was cured likewise in Example 1 to produce a resin layered body (L-17). The film thickness of the hard coating layer (J-1) was 6 μm.
In this resin layered body (L-17), the total light transmittance was 90.8%, the haze was 0.5%, the pencil hardness was 3H, the interference fringes were ○, the cracking at a bent portion (hot press forming processability) was ○, and the spring back (hot press forming processability) was ×.

Comparative Example 18 [To Produce Resin Layered Body (L-18)]

The same coating material as in Example 1 was applied with a bar coater onto a surface of thermoplastic resin (B-1) on one side of the resin layered body (I-18) obtained in Comparative Production Example 18B, and the hard coating was cured likewise in Example 1 to produce a resin layered body (L-18). The film thickness of the hard coating layer (J-1) was 6 μm.
In this resin layered body (L-18), the total light transmittance was 90.8%, the haze was 0.5%, the pencil hardness was 3H, the interference fringes were ○, the cracking at a bent portion (hot press forming processability) was ○, and the spring back (hot press forming processability) was ×.

Comparative Example 19 [To Produce Resin Layered Body (L-19)]

The same coating material as in Example 1 was applied with a bar coater onto a surface of thermoplastic resin (B-2) of the resin layered body (I-19) obtained in Comparative Production Example 19B, and the hard coating was cured likewise in Example 1 to produce a resin layered body (L-19). The film thickness of the hard coating layer (J-1) was 6 μm.
In this resin layered body (L-19), the total light transmittance was 90.6%, the haze was 0.5%, the pencil hardness was 2H, the interference fringes were O, the cracking at a bent portion (hot press forming processability) was ○, and the spring back (hot press forming processability) was ×.

Comparative Example 20 [To Produce Resin Layered Body (L-20)]

The same coating material as in Example 1 was applied with a bar coater onto a surface of thermoplastic resin (B-2) of the resin layered body (I-20) obtained in Comparative Production Example 20B, and the hard coating was cured likewise in Example 1 to produce a resin layered body (L-20). The film thickness of the hard coating layer (J-1) was 6 μm.
In this resin layered body (L-20), the total light transmittance was 90.4%, the haze was 0.6%, the pencil hardness was 3H, the interference fringes were ○, the cracking at a bent portion (hot press forming processability) was ○, and the spring back (hot press forming processability) was ×.

Comparative Example 21 [To Produce Resin Layered Body (L-21)]

The same coating material as in Example 1 was applied with a bar coater onto a surface of thermoplastic resin (B-2) on one side of the resin layered body (I-21) obtained in Comparative Production Example 21B, and the hard coating was cured likewise in Example 1 to produce a resin layered body (L-21). The film thickness of the hard coating layer (J-1) was 6 μm.
In this resin layered body (L-21), the total light transmittance was 90.4%, the haze was 0.6%, the pencil hardness was 2H, the interference fringes were O, the cracking at a bent portion (hot press forming processability) was ○, and the spring back (hot press forming processability) was ×.

Comparative Example 22 [To Produce Resin Layered Body (L-22)]

The same coating material as in Example 1 was applied with a bar coater onto a surface of thermoplastic resin (B-3) of the resin layered body (I-22) obtained in Comparative Production Example 22B, and the hard coating was cured likewise in Example 1 to produce a resin layered body (L-22). The film thickness of the hard coating layer (J-1) was 6 μm.
In this resin layered body (L-22), the total light transmittance was 90.8%, the haze was 0.3%, the pencil hardness was 3H, the interference fringes were ○, the cracking at a bent portion (hot press forming processability) was ○, and the spring back (hot press forming processability) was ×.

Comparative Example 23 [To Produce Resin Layered Body (L-23)]

The same coating material as in Example 1 was applied with a bar coater onto a surface of thermoplastic resin (B-3) of the resin layered body (I-23) obtained in Comparative Production Example 23B, and the hard coating was cured likewise in Example 1 to produce a resin layered body (L-23). The film thickness of the hard coating layer (J-1) was 6 μm.
In this resin layered body (L-23), the total light transmittance was 90.8%, the haze was 0.5%, the pencil hardness was 3H, the interference fringes were ○, the cracking at a bent portion (hot press forming processability) was ○, and the spring back (hot press forming processability) was ×.

Comparative Example 24 [To Produce Resin Layered Body (L-24)]

The same coating material as in Example 1 was applied with a bar coater onto a surface of thermoplastic resin (B-3) on one side of the resin layered body (I-24) obtained in Comparative Production Example 24B, and the hard coating was cured likewise in Example 1 to produce a resin layered body (L-24). The film thickness of the hard coating layer (J-1) was 6 μm.
In this resin layered body (L-24), the total light transmittance was 90.8%, the haze was 0.5%, the pencil hardness was 3H, the interference fringes were ○, the cracking at a bent portion (hot press forming processability) was ○, and the spring back (hot press forming processability) was ×.

Comparative Example 25 [To Produce Resin Layered Body (L-25)]

The same coating material as in Example 1 was applied with a bar coater onto a surface of thermoplastic resin (B-4) of the resin layered body (I-25) obtained in Comparative Production Example 25B, and the hard coating was cured likewise in Example 1 to produce a resin layered body (L-25). The film thickness of the hard coating layer (J-1) was 6 μm.
In this resin layered body (L-25), the total light transmittance was 90.6%, the haze was 0.5%, the pencil hardness was 2H, the interference fringes were ○, the cracking at a bent portion (hot press forming processability) was ○, and the spring back (hot press forming processability) was ×.

Comparative Example 26 [To Produce Resin Layered Body (L-26)]

The same coating material as in Example 1 was applied with a bar coater onto a surface of thermoplastic resin (B-4) of the resin layered body (I-26) obtained in Comparative Production Example 26B, and the hard coating was cured likewise in Example 1 to produce a resin layered body (L-26). The film thickness of the hard coating layer (J-1) was 6 μm.
In this resin layered body (L-26), the total light transmittance was 90.4%, the haze was 0.6%, the pencil hardness was 3H, the interference fringes were ○, the cracking at a bent portion (hot press forming processability) was ○, and the spring back (hot press forming processability) was ×.

Comparative Example 27 [To Produce Resin Layered Body (L-27)]

The same coating material as in Example 1 was applied with a bar coater onto a surface of thermoplastic resin (B-4) on one side of the resin layered body (I-27) obtained in Comparative Production Example 27B, and the hard coating was cured likewise in Example 1 to produce a resin layered body (L-27). The film thickness of the hard coating layer (J-1) was 6 μm.
In this resin layered body (L-27), the total light transmittance was 90.4%, the haze was 0.6%, the pencil hardness was 2H, the interference fringes were O, the cracking at a bent portion (hot press forming processability) was ○, and the spring back (hot press forming processability) was ×.

Comparative Example 28 [To Produce Resin Layered Body (L-28)]

The same coating material as in Example 1 was applied with a bar coater onto a surface of thermoplastic resin (F-1) of the resin layered body (I-28) obtained in Comparative Production Example 28B, and the hard coating was cured likewise in Example 1 to produce a resin layered body (L-28). The film thickness of the hard coating layer (J-1) was 6 μm.
In this resin layered body (L-28), the total light transmittance was 91.1%, the haze was 0.5%, the pencil hardness was 3H, the interference fringes were ○, the cracking at a bent portion (hot press forming processability) was ×, and the spring back (hot press forming processability) was ×.

Comparative Example 29 [To Produce Resin Layered Body (L-29)]

The same coating material as in Example 1 was applied with a bar coater onto a surface of thermoplastic resin (F-1) of the resin layered body (I-29) obtained in Comparative Production Example 29B, and the hard coating was cured likewise in Example 1 to produce a resin layered body (L-29). The film thickness of the hard coating layer (J-1) was 6 μm.
In this resin layered body (L-29), the total light transmittance was 91.0%, the haze was 0.6%, the pencil hardness was 4H, the interference fringes were ○, the cracking at a bent portion (hot press forming processability) was ×, and the spring back (hot press forming processability) was ×.

Comparative Example 30 [To Produce Resin Layered Body (L-30)]

The same coating material as in Example 1 was applied with a bar coater onto a surface of thermoplastic resin (F-1) on one side of the resin layered body (I-30) obtained in Comparative Production Example 30B, and the hard coating was cured likewise in Example 1 to produce a resin layered body (L-30). The film thickness of the hard coating layer (J-1) was 6 μm.
In this resin layered body (L-30), the total light transmittance was 91.0%, the haze was 0.6%, the pencil hardness was 3H, the interference fringes were ○, the cracking at a bent portion (hot press forming processability) was ×, and the spring back (hot press forming processability) was ×.

Comparative Example 31 [To Produce Resin Layered Body (L-31)]

The same coating material as in Example 1 was applied with a bar coater onto a surface of thermoplastic resin (F-2) of the resin layered body (I-31) obtained in Comparative Production Example 31B, and the hard coating was cured likewise in Example 1 to produce a resin layered body (L-31). The film thickness of the hard coating layer (J-1) was 6 μm.
In this resin layered body (L-31), the total light transmittance was 91.1%, the haze was 0.5%, the pencil hardness was 3H, the interference fringes were O, the cracking at a bent portion (hot press forming processability) was ×, and the spring back (hot press forming processability) was ×.

Comparative Example 32 [To Produce Resin Layered Body (L-32)]

The same coating material as in Example 1 was applied with a bar coater onto a surface of thermoplastic resin (F-2) of the resin layered body (I-32) obtained in Comparative Production Example 32B, and the hard coating was cured likewise in Example 1 to produce a resin layered body (L-32). The film thickness of the hard coating layer (J-1) was 6 μm.
In this resin layered body (L-32), the total light transmittance was 91.0%, the haze was 0.6%, the pencil hardness was 4H, the interference fringes were ○, the cracking at a bent portion (hot press forming processability) was ×, and the spring back (hot press forming processability) was ×.

Comparative Example 33 [To Produce Resin Layered Body (L-33)]

The same coating material as in Example 1 was applied with a bar coater onto a surface of thermoplastic resin (F-2) on one side of the resin layered body (I-33) obtained in Comparative Production Example 33B, and the hard coating was cured likewise in Example 1 to produce a resin layered body (L-33). The film thickness of the hard coating layer (J-1) was 6 μm.
In this resin layered body (L-33), the total light transmittance was 91.0%, the haze was 0.6%, the pencil hardness was 3H, the interference fringes were ○, the cracking at a bent portion (hot press forming processability) was ×, and the spring back (hot press forming processability) was ×.

Comparative Example 34 [To Produce Resin Layered Body (L-34)]

The same coating material as in Example 1 was applied with a bar coater onto a surface of thermoplastic resin (F-3) of the resin layered body (I-34) obtained in Comparative Production Example 34B, and the hard coating was cured likewise in Example 1 to produce a resin layered body (L-34). The film thickness of the hard coating layer (J-1) was 6 μm.
In this resin layered body (L-34), the total light transmittance was 91.5%, the haze was 0.2%, the pencil hardness was 4H, the interference fringes were ×, the cracking at a bent portion (hot press forming processability) was ×, and the spring back (hot press forming processability) was ×.

Comparative Example 35 [To Produce Resin Layered Body (L-35)]

The same coating material as in Example 1 was applied with a bar coater onto a surface of thermoplastic resin (F-3) of the resin layered body (I-35) obtained in Comparative Production Example 35B, and the hard coating was cured likewise in Example 1 to produce a resin layered body (L-35). The film thickness of the hard coating layer (J-1) was 6 μm.
In this resin layered body (L-35), the total light transmittance was 91.5%, the haze was 0.2%, the pencil hardness was 4H, the interference fringes were ×, the cracking at a bent portion (hot press forming processability) was ×, and the spring back (hot press forming processability) was ×.

Comparative Example 36 [To Produce Resin Layered Body (L-36)]

The same coating material as in Example 1 was applied with a bar coater onto a surface of thermoplastic resin (F-3) on one side of the resin layered body (I-36) obtained in Comparative Production Example 36B, and the hard coating was cured likewise in Example 1 to produce a resin layered body (L-36). The film thickness of the hard coating layer (J-1) was 6 μm.
In this resin layered body (L-36), the total light transmittance was 91.5%, the haze was 0.2%, the pencil hardness was 4H, the interference fringes were ×, the cracking at a bent portion (hot press forming processability) was ×, and the spring back (hot press forming processability) was ×.

Comparative Example 37 [To Produce Resin Layered Body (L-37)]

The same coating material as in Example 1 was applied with a bar coater onto a surface of thermoplastic resin (F-4) of the resin layered body (I-37) obtained in Comparative Production Example 37B, and the hard coating was cured likewise in Example 1 to produce a resin layered body (L-37). The film thickness of the hard coating layer (J-1) was 6 μm.
In this resin layered body (L-37), the total light transmittance was 91.5%, the haze was 0.2%, the pencil hardness was 4H, the interference fringes were ×, the cracking at a bent portion (hot press forming processability) was ×, and the spring back (hot press forming processability) was ×.

Comparative Example 38 [To Produce Resin Layered Body (L-38)]

The same coating material as in Example 1 was applied with a bar coater onto a surface of thermoplastic resin (F-4) of the resin layered body (I-38) obtained in Comparative Production Example 38B, and the hard coating was cured likewise in Example 1 to produce a resin layered body (L-38). The film thickness of the hard coating layer (J-1) was 6 μm.
In this resin layered body (L-38), the total light transmittance was 91.5%, the haze was 0.2%, the pencil hardness was 4H, the interference fringes were ×, the cracking at a bent portion (hot press forming processability) was ×, and the spring back (hot press forming processability) was ×.

Comparative Example 39 [To Produce Resin Layered Body (L-39)]

The same coating material as in Example 1 was applied with a bar coater onto a surface of thermoplastic resin (F-4) on one side of the resin layered body (I-39) obtained in Comparative Production Example 39B, and the hard coating was cured likewise in Example 1 to produce a resin layered body (L-39). The film thickness of the hard coating layer (J-1) was 6 μm.
In this resin layered body (L-39), the total light transmittance was 91.5%, the haze was 0.2%, the pencil hardness was 4H, the interference fringes were ×, the cracking at a bent portion (hot press forming processability) was ×, and the spring back (hot press forming processability) was ×.

Comparative Example 40 [To Produce Resin Layered Body (L-40)]

The same coating material as in Example 1 was applied with a bar coater onto a surface of thermoplastic resin (F-5) of the resin layered body (I-40) obtained in Comparative Production Example 40B, and the hard coating was cured likewise in Example 1 to produce a resin layered body (L-40). The film thickness of the hard coating layer (J-1) was 6 μm.
In this resin layered body (L-40), the total light transmittance was 90.5%, the haze was 0.6%, the pencil hardness was H, the interference fringes were ○, the cracking at a bent portion (hot press forming processability) was ×, and the spring back (hot press forming processability) was ×.

Comparative Example 41 [To Produce Resin Layered Body (L-41)]

The same coating material as in Example 1 was applied with a bar coater onto a surface of thermoplastic resin (F-5) of the resin layered body (I-41) obtained in Comparative Production Example 41B, and the hard coating was cured likewise in Example 1 to produce a resin layered body (L-41). The film thickness of the hard coating layer (J-1) was 6 μm.
In this resin layered body (I-41), the total light transmittance was 90.4%, the haze was 0.7%, the pencil hardness was 2H, the interference fringes were ○, the cracking at a bent portion (hot press forming processability) was ×, and the spring back (hot press forming processability) was ×.

Comparative Example 42 [To Produce Resin Layered Body (L-42)]

The same coating material as in Example 1 was applied with a bar coater onto a surface of thermoplastic resin (F-5) on one side of the resin layered body (I-42) obtained in Comparative Production Example 42B, and the hard coating was cured likewise in Example 1 to produce a resin layered body (L-42). The film thickness of the hard coating layer (J-1) was 6 μm.
In this resin layered body (L-42), the total light transmittance was 90.4%, the haze was 0.7%, the pencil hardness was H, the interference fringes were ○, the cracking at a bent portion (hot press forming processability) was ×, and the spring back (hot press forming processability) was ×.

[Table 4]

Table 4

| Example | After hard coating application | | | | | | | | |
|---|---|---|---|---|---|---|---|---|---|
| | Resin layered body | Layer structure | Thickness Coating J / B or F / A or G (/ B or F) [μm] | Total light transmittance [%] | Haze [%] | Pencil hardness on a surface of coating J | Interference fringes | Hot press forming processability | |
| | | | | | | | | Cracking at a bent portion | Spring back |
| Example 1 | K-1 | J-1/B-1/A-1 | 6/60/940 | 90.8 | 0.3 | 3H | ○ | ○ | ○ |
| Example 2 | K-2 | J-1/B-1/A-1 | 6/100/900 | 90.8 | 0.5 | 3H | ○ | ○ | ○ |
| Example 3 | K-3 | J-1/B-1/A-1/B-1 | 6/60/880(/60) | 90.8 | 0.5 | 3H | ○ | ○ | ○ |
| Example 4 | K-4 | J-1/B-2/A-1 | 6/60/940 | 90.6 | 0.5 | 2H | ○ | ○ | ○ |
| Example 5 | K-5 | J-1/B-2/A-1 | 6/100/900 | 90.4 | 0.6 | 3H | ○ | ○ | ○ |
| Example 6 | K-6 | J-1/B-2/A-1/B-2 | 6/60/880(/60) | 90.4 | 0.6 | 2H | ○ | ○ | ○ |
| Example 7 | K-7 | J-1/B-3/A-1 | 6/60/940 | 90.8 | 0.3 | 3H | ○ | ○ | ○ |
| Example 8 | K-8 | J-1/B-3/A-1 | 6/100/900 | 90.8 | 0.5 | 3H | ○ | ○ | ○ |
| Example 9 | K-9 | J-1/B-3/A-1/B-3 | 6/60/880(/60) | 90.8 | 0.5 | 3H | ○ | ○ | ○ |
| Example 10 | K-10 | J-1/B-4/A-1 | 6/60/940 | 90.6 | 0.5 | 2H | ○ | ○ | ○ |
| Example 11 | K-11 | J-1/B-4/A-1 | 6/100/900 | 90.4 | 0.6 | 3H | ○ | ○ | ○ |
| Example 12 | K-12 | J-1/B-4/A-1/B-4 | 6/60/880(/60) | 90.4 | 0.6 | 2H | ○ | ○ | ○ |
| Comp. Ex. 1 | L-1 | J-1/F-1/A-1 | 6/60/940 | 91.1 | 0.5 | 3H | ○ | × | ○ |
| Comp. Ex. 2 | L-2 | J-1/F-1/A-1 | 6/100/900 | 91.0 | 0.6 | 4H | ○ | × | ○ |
| Comp. Ex. 3 | L-3 | J-1/F-1/A-1/F-1 | 6/60/880(/60) | 91.0 | 0.6 | 3H | ○ | × | ○ |
| Comp. Ex. 4 | L-4 | J-1/F-2/A-1 | 6/60/940 | 91.1 | 0.5 | 3H | ○ | × | ○ |
| Comp. Ex. 5 | L-5 | J-1/F-2/A-1 | 6/100/900 | 91.0 | 0.6 | 4H | ○ | × | ○ |
| Comp. Ex. 6 | L-6 | J-1/F-2/A-1/F-2 | 6/60/880(/60) | 91.0 | 0.6 | 3H | ○ | × | ○ |
| Comp. Ex. 7 | L-7 | J-1/F-3/A-1 | 6/60/940 | 91.5 | 0.2 | 4H | × | × | ○ |
| Comp. Ex. 8 | L-8 | J-1/F-3/A-1 | 6/100/900 | 91.5 | 0.2 | 4H | × | × | ○ |
| Comp. Ex. 9 | L-9 | J-1/F-3/A-1/F-3 | 6/60/880(/60) | 91.5 | 0.2 | 4H | × | × | ○ |
| Comp. Ex. 10 | L-10 | J-1/F-4/A-1 | 6/60/940 | 91.5 | 0.2 | 4H | × | × | ○ |

(continued)

| Example | After hard coating application | | | | | | | | |
|---|---|---|---|---|---|---|---|---|---|
| | Resin layered body | Layer structure | Thickness Coating J / B or F / A or G (/ B or F) [μm] | Total light transmittance [%] | Haze [%] | Pencil hardness on a surface of coating J | Interference fringes | Hot press forming processability | |
| | | | | | | | | Cracking at a bent portion | Spring back |
| Comp. Ex. 11 | L-11 | J-1/F-4/A-1 | 6/100/900 | 91.5 | 0.2 | 4H | × | × | ○ |
| Comp. Ex. 12 | L-12 | J-1/F-4/A-1/F-4 | 6/60/880(/60) | 91.5 | 0.2 | 4H | × | × | ○ |
| Comp. Ex. 13 | L-13 | J-1/F-5/A-1 | 6/60/940 | 90.5 | 0.6 | H | ○ | × | ○ |
| Comp. Ex. 14 | L-14 | J-1/F-5/A-1 | 6/100/900 | 90.4 | 0.7 | 2H | ○ | × | ○ |
| Comp. Ex. 15 | L-15 | J-1/F-5/A-1/F-5 | 6/60/880(/60) | 90.4 | 0.7 | H | ○ | × | ○ |
| Comp. Ex. 16 | L-16 | J-1/B-1/G-1 | 6/60/940 | 90.8 | 0.3 | 3H | ○ | ○ | × |
| Comp. Ex. 17 | L-17 | J-1/B-1/G-1 | 6/100/900 | 90.8 | 0.5 | 3H | ○ | ○ | × |
| Comp. Ex. 18 | L-18 | J-1/B-1/G-1/B-1 | 6/60/880(/60) | 90.8 | 0.5 | 3H | ○ | ○ | × |
| Comp. Ex. 19 | L-19 | J-1/B-2/G-1 | 6/60/940 | 90.6 | 0.5 | 2H | ○ | ○ | × |
| Comp. Ex. 20 | L-20 | J-1/B-2/G-1 | 6/100/900 | 90.4 | 0.6 | 3H | ○ | ○ | × |
| Comp. Ex. 21 | L-21 | J-1/B-21G-1/B-2 | 6/60/880(/60) | 90.4 | 0.6 | 2H | ○ | ○ | × |
| Comp. Ex. 22 | L-22 | J-1/B-3/G-1 | 6/60/940 | 90.8 | 0.3 | 3H | ○ | ○ | × |
| Comp. Ex. 23 | L-23 | J-1/B-3/G-1 | 6/100/900 | 90.8 | 0.5 | 3H | ○ | ○ | × |
| Comp. Ex. 24 | L-24 | J-1/B-3/G-1/B-3 | 6/60/880(/60) | 90.8 | 0.5 | 3H | ○ | ○ | × |
| Comp. Ex. 25 | L-25 | J-1/B-4/G-1 | 6/60/940 | 90.6 | 0.5 | 2H | ○ | ○ | × |
| Comp. Ex. 26 | L-26 | J-1/B-4/G-1 | 6/100/900 | 90.4 | 0.6 | 3H | ○ | ○ | × |
| Comp. Ex. 27 | L-27 | J-1/B-4/G-1/B-4 | 6/60/880(/60) | 90.4 | 0.6 | 2H | ○ | ○ | × |
| Comp. Ex. 28 | L-28 | J-1/F-1/G-1 | 6/60/940 | 91.1 | 0.5 | 3H | ○ | × | × |
| Comp. Ex. 29 | L-29 | J-1/F-1/G-1 | 6/100/900 | 91.0 | 0.6 | 4H | ○ | × | × |
| Comp. Ex. 30 | L-30 | J-1/F-1/G-1/F-1 | 6/60/880(/60) | 91.0 | 0.6 | 3H | ○ | × | × |
| Comp. Ex. 31 | L-31 | J-1/F-2/G-1 | 6/60/940 | 91.1 | 0.5 | 3H | ○ | × | × |
| Comp. Ex. 32 | L-32 | J-1/F-2/G-1 | 6/100/900 | 91.0 | 0.6 | 4H | ○ | × | × |
| Comp. Ex. 33 | L-33 | J-1/F-2/G-1/F-2 | 6/60/880(/60) | 91.0 | 0.6 | 3H | ○ | × | × |

(continued)

| Example | After hard coating application | | | | | | | | |
|---|---|---|---|---|---|---|---|---|---|
| | Resin layered body | Layer structure | Thickness Coating J / B or F / A or G (/ B or F) [μm] | Total light transmittance [%] | Haze [%] | Pencil hardness on a surface of coating J | Interference fringes | Hot press forming processability | |
| | | | | | | | | Cracking at a bent portion | Spring back |
| Comp. Ex. 34 | L-34 | J-1/F-3/G-1 | 6/60/940 | 91.5 | 0.2 | 4H | × | × | × |
| Comp. Ex. 35 | L-35 | J-1/F-3/G-1 | 6/100/900 | 91.5 | 0.2 | 4H | × | × | × |
| Comp. Ex. 36 | L-36 | J-1/F-3/G-1/F-3 | 6/60/880(/60) | 91.5 | 0.2 | 4H | × | × | × |
| Comp. Ex. 37 | L-37 | J-1/F-4/G-1 | 6/60/940 | 91.5 | 0.2 | 4H | × | × | × |
| Comp. Ex. 38 | L-38 | J-1/F-4/G-1 | 6/100/900 | 91.5 | 0.2 | 4H | × | × | × |
| Comp. Ex. 39 | L-39 | J-1/F-4/G-1/F-4 | 6/60/880(/60) | 91.5 | 0.2 | 4H | × | × | × |
| Comp. Ex. 40 | L-40 | J-1/F-5/G-1 | 6/60/940 | 90.5 | 0.6 | H | ○ | × | × |
| Comp. Ex. 41 | L-41 | J-1/F-5/G-1 | 6/100/900 | 90.4 | 0.7 | 2H | ○ | × | × |
| Comp. Ex. 42 | L-42 | J-1/F-5/G-1/F-5 | 6/60/880(/60) | 90.4 | 0.7 | H | ○ | × | × |

As described above, if the conditions in the invention are met, advantageous effects can be exerted to be able to obtain a resin layered body having excellent lowtemperature thermoformability and favorable appearance so as to suppress occurrence of interference fringes.

Specifically, as shown in Table 2, when Production Examples 1A to 4A, in which the methacrylic resin (C) and the specific styrene copolymer (D) were blended in the pelletized thermoplastic resin (B), and Comparative Production Examples 3A to 4A, which include only the methacrylic resin (C), were compared, the refractive index was higher in Production Examples 1A to 4A.

In addition, when the Production Examples 1A to 4A and Comparative Production Examples 6A to 9A, in which the methacrylic resin (C) and the styrene copolymer (E) other than the specific styrene copolymer (D) were blended, were compared, the Production Examples 1A to 4A had more transparent and better appearance.

As shown in Table 3, Production Examples 1B to 12B, in which the methacrylic resin (C) characteristic of a high refractive index and the specific styrene copolymer (D) were blended and pelletized to prepare the thermoplastic resin (B) and the thermoplastic resin (B) and the specific polycarbonate-based resin (A) were then layered in the resin layered body before hard coating application, and Comparative Production Examples 7B to 12B, in which just the methacrylic resin (C) was pelletized to prepare the thermoplastic resin and the thermoplastic resin and the specific polycarbonate-based resin (A) were then layered, were compared. Here, the resin layered bodies of the Production Examples 1B to 12B had more favorable interference fringes.

In addition, Production Examples 1B to 12B and Comparative Production Examples 13B to 15B, in which just the specific styrene copolymer (D) was pelletized to prepare the thermoplastic resin and the thermoplastic resin and the specific polycarbonate-based resin (A) were then layered, were compared. Here, the resin layered bodies of the Production Examples 1B to 12B had less cracking at a bent portion during hot press forming.

Further, Production Examples 1B to 12B and Comparative Production Examples 16B to 42B, in which the polycarbonate-based resin (G) other than the specific polycarbonate-based resin (A) was layered, were compared. Here, the resin layered bodies of the Production Examples 1B to 12B had less spring back during hot press forming.

As shown in Table 4, Examples 1 to 12, in which the methacrylic resin (C) and the specific styrene copolymer (D) were blended and pelletized to prepare the thermoplastic resin (B), the thermoplastic resin (B) and the specific polycarbonate-based resin (A) were then layered, and a surface of the thermoplastic resin (B) on one side had a hard coating in the resin layered body after hard coating application, and Comparative Examples 7 to 12, in which just the methacrylic resin (C) was pelletized to prepare the thermoplastic resin, the thermoplastic resin and the specific polycarbonate-based resin (A) were then layered, and a surface of the thermoplastic resin on one side had a hard coating, were compared. Here, the resin layered bodies of the Examples 1 to 12 had more favorable interference fringes, which was similar to those before the hard coating application.

In addition, Examples 1 to 12 and Comparative Examples 13 to 15, in which just the specific styrene copolymer (D) was pelletized to prepare the thermoplastic resin, the thermoplastic resin and the specific polycarbonate-based resin (A) were then layered, and a surface of the thermoplastic resin on one side had a hard coating, were compared. Here, the resin layered bodies of the Examples 1 to 12 had less cracking at a bent portion during hot press forming, which was similar to those before the hard coating application.

Further, Examples 1 to 12 and Comparative Examples 16 to 42, in which the polycarbonate-based resin (G) other than the specific polycarbonate-based resin (A) was layered and a surface of the thermoplastic resin on one side had a hard coating, were compared. Here, the resin layered bodies of the Examples 1 to 12 had less spring back during hot press forming, which was similar to those before the hard coating application.

Furthermore, Examples 1 to 12 and Comparative Examples 1 to 6, in which the methacrylic resin (C) and the specific styrene copolymer (D) were blended at a ratio other than the specific ratio and pelletized to prepare the thermoplastic resin, the thermoplastic resin and the specific polycarbonate-based resin (A) were then layered, and a surface of the thermoplastic resin on one side had a hard coating, were compared. Here, the resin layered bodies of the Examples 1 to 12 had less cracking at a bent portion during hot press forming, which was different from those before the hard coating application.

## Claims

**1.** A resin layered body comprising:

a layer containing a polycarbonate-based resin (A);
a layer containing a thermoplastic resin (B) on at least one surface of the layer containing a polycarbonate-based resin (A); and
a hard coating layer on a surface of at least one of the layer(s) containing a thermoplastic resin (B), wherein
the polycarbonate-based resin (A) has a glass-transition temperature of 115°C or higher and less than 130°C,

a difference between the glass-transition temperature of the polycarbonate-based resin (A) and a glass-transition temperature of the thermoplastic resin (B) is in a range of from 0 to 15°C,
the thermoplastic resin (B) comprises a methacrylic resin (C) and a styrene copolymer (D),
a content of the methacrylic resin (C) is from 15 to 60 parts by mass and a content of the styrene copolymer (D) is from 85 to 40 parts by mass based on 100 parts by mass of a total content of the methacrylic resin (C) and the styrene copolymer (D),
the styrene copolymer (D) is a copolymer consisting of styrene in an amount of from 68 to 84 mass% and maleic anhydride in an amount of from 16 to 32 mass%, and
the hard coating layer is made of an acrylic hard coating.

2. The resin layered body according to claim 1, wherein the thermoplastic resin (B) consists of the methacrylic resin (C) and the styrene copolymer (D).

3. The resin layered body according to claim 1 or 2, wherein the thermoplastic resin (B) is a polymer alloy of the methacrylic resin (C) and the styrene copolymer (D).

4. The resin layered body according to any one of claims 1 to 3, wherein the polycarbonate-based resin (A) comprises a structural unit derived from a divalent phenol and a terminal structure derived from a monovalent phenol represented by the following general formula (1):

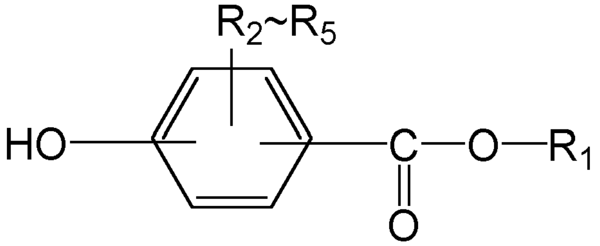

(1)

wherein $R_1$ represents a $C_{8-36}$ alkyl group or a $C_{8-36}$ alkenyl group; and
$R_2$ to $R_5$ each represent hydrogen, halogen, or an optionally substituted $C_{1-20}$ alkyl or $C_{6-12}$ aryl group where the substituent is halogen, a $C_{1-20}$ alkyl group, or a $C_{6-12}$ aryl group.

5. The resin layered body according to any one of claims 1 to 4, wherein the layer containing a thermoplastic resin (B) has a thickness of from 10 to 250 μm and the resin layered body has an overall thickness in a range of from 0.4 to 4.0 mm.

6. The resin layered body according to any one of claims 1 to 5, wherein at least one of the layer containing a polycarbonate-based resin (A), the layer containing a thermoplastic resin (B), or the hard coating layer comprises a UV absorber.

7. The resin layered body according to any one of claims 1 to 6, wherein one or both surfaces of the resin layered body are subjected to at least one of antifingerprint, anti-reflection, anti-glare, weatherproof, anti-static, or anti-fouling treatment.

8. A thermoformed product produced by heat bending the resin layered body according to any one of claims 1 to 7.

9. A transparent substrate material comprising the resin layered body according to any one of claims 1 to 7 or the thermoformed product according to claim 8.

10. A transparent protective material comprising the resin layered body according to any one of claims 1 to 7 or the thermoformed product according to claim 8.

11. A touch-panel front surface protective plate comprising the resin layered body according to any one of claims 1 to 7 or the thermoformed product according to claim 8.

12. A front plate for a car navigation system, OA equipment, or a portable electronic device, comprising the resin layered body according to any one of claims 1 to 7 or the thermoformed product according to claim 8.

**Patentansprüche**

1. Harzschichtkörper, umfassend:

   eine Schicht, die ein Harz auf Polycarbonatbasis (A) enthält,
   eine Schicht, die ein thermoplastisches Harz (B) enthält, auf mindestens einer Oberfläche der Schicht, die ein Harz auf Polycarbonatbasis (A) enthält, und
   eine harte Beschichtungsschicht auf einer Oberfläche von mindestens einer der Schicht(en), die ein thermoplastisches Harz (B) enthält/enthalten, wobei
   das Harz auf Polycarbonatbasis (A) eine Glasübergangstemperatur von 115°C oder höher und weniger als 130°C aufweist,
   ein Unterschied zwischen der Glasübergangstemperatur des Harzes auf Polycarbonatbasis (A) und der Glasübergangstemperatur des thermoplastischen Harzes (B) in einem Bereich von 0 bis 15°C liegt,
   das thermoplastische Harz (B) ein Methacrylharz (C) und ein Styrolcopolymer (D) umfasst,
   ein Gehalt des Methacrylharzes (C) 15 bis 60 Masseteile beträgt und ein Gehalt des Styrolcopolymers (D) 85 bis 40 Masseteile beträgt, bezogen auf 100 Masseteile eines Gesamtgehalts des Methacrylharzes (C) und des Styrolcopolymers (D),
   das Styrolcopolymer (D) ein Copolymer ist, das aus Styrol in einer Menge von 68 bis 84 Masse-% und Maleinsäureanhydrid in einer Menge von 16 bis 32 Masse-% besteht, und
   die harte Beschichtungsschicht aus einer Acryl-Hartbeschichtung ist.

2. Harzschichtkörper gemäß Anspruch 1, wobei das thermoplastische Harz (B) aus dem Methacrylharz (C) und dem Styrolcopolymer (B) besteht.

3. Harzschichtkörper gemäß Anspruch 1 oder 2, wobei das thermoplastische Harz (B) eine Polymerlegierung aus dem Methacrylharz (C) und dem Styrolcopolymer (D) ist.

4. Harzschichtkörper gemäß einem der Ansprüche 1 bis 3, wobei das Harz auf Polycarbonatbasis (A) eine von einem zweiwertigen Phenol abgeleitete Struktureinheit und eine von einem durch die folgende allgemeine Formel (1) dargestellten einwertigen Phenol abgeleitete Endstruktur umfasst:

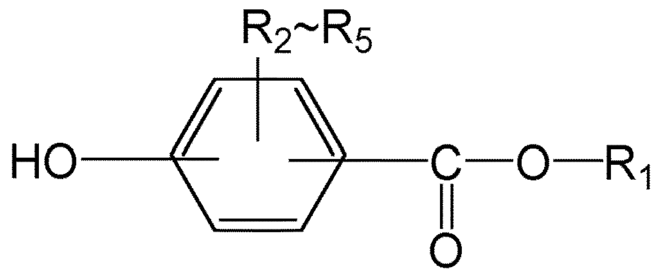 (1)

   worin $R_1$ eine $C_{8-36}$-Alkylgruppe oder eine $C_{8-36}$-Alkenylgruppe darstellt und
   $R_2$ und $R_5$ jeweils Wasserstoff, Halogen oder eine optional substituierte $C_{1-20}$-Alkyl- oder $C_{6-12}$-Arylgruppe, worin der Substituent Halogen eine $C_{1-20}$-Alkylgruppe oder eine $C_{6-12}$-Arylgruppe ist, darstellen.

5. Harzschichtkörper gemäß einem der Ansprüche 1 bis 4, wobei die Schicht, die ein thermoplastisches Harz (B) enthält, eine Dicke von 10 bis 250 μm aufweist und der Harzschichtkörper eine Gesamtdicke in einem Bereich von 0,4 bis 4,0 mm aufweist.

6. Harzschichtkörper gemäß einem der Ansprüche 1 bis 5, wobei mindestens eine von der Schicht, die ein Harz auf Polycarbonatbasis (A) enthält, der Schicht, die ein thermoplastisches Harz (B) enthält, oder der harten Beschichtungsschicht einen UV-Absorber umfasst.

7. Harzschichtkörper gemäß einem der Ansprüche 1 bis 6, wobei eine oder beide Oberflächen des Harzschichtkörpers mindestens einer von einer Anti-Fingerabdruck-, AntiReflex-, Blendschutz-, Wetterschutz-, antistatischen oder Anti-Fouling-Behandlung unterzogen sind.

8. Thermogeformtes Produkt, hergestellt durch Wärmebiegen des Harzschichtkörpers gemäß einem der Ansprüche 1

bis 7.

9. Transparentes Substratmaterial, umfassend den Harzschichtkörper gemäß einem der Ansprüche 1 bis 7 oder das thermogeformte Produkt gemäß Anspruch 8.

10. Transparentes Schutzmaterial, umfassend den Harzschichtkörper gemäß einem der Ansprüche 1 bis 7 oder das thermogeformte Produkt gemäß Anspruch 8.

11. Schutzplatte für die Vorderseite eines Touchpanels, umfassend den Harzschichtkörper gemäß einem der Ansprüche 1 bis 7 oder das thermogeformte Produkt gemäß Anspruch 8.

12. Frontplatte für ein Fahrzeugnavigationssystem, ein OA-Gerät oder ein tragbares elektronisches Gerät, umfassend den Harzschichtkörper gemäß einem der Ansprüche 1 bis 7 oder das thermogeformte Produkt gemäß Anspruch 8.

## Revendications

1. Corps stratifié en résine comprenant :

une couche contenant une résine à base de polycarbonate (A) ;
une couche contenant une résine thermoplastique (B) sur au moins une surface de la couche contenant une résine à base de polycarbonate (A) ; et
une couche de revêtement dur sur une surface d'au moins une de la ou des couches contenant une résine thermoplastique (B), dans lequel
la résine à base de polycarbonate (A) présente une température de transition vitreuse de 115 °C ou plus et moins de 130 °C,
une différence entre la température de transition vitreuse de la résine à base de polycarbonate (A) et une température de transition vitreuse de la résine thermoplastique (B) est dans une plage de 0 °C à 15 °C,
la résine thermoplastique (B) comprend une résine méthacrylique (C) et un copolymère de styrène (D),
une teneur de la résine méthacrylique (C) est de entre 15 parties en masse à 60 parties en masse et une teneur du copolymère de styrène (D) est de entre 85 parties en masse et 40 parties en masse sur la base de 100 parties en masse d'une teneur totale de la résine méthacrylique (C) et du copolymère de styrène (D),
le copolymère de styrène (D) est un copolymère consistant en styrène dans une quantité de entre 68 % en masse à 84 % en masse et en anhydride maléique dans une quantité de entre 16 % en masse à 32 % en masse, et
la couche de revêtement dur est faite d'un revêtement dur en acrylique.

2. Corps stratifié en résine selon la revendication 1, dans lequel la résine thermoplastique (B) consiste en la résine méthacrylique (C) et le copolymère de styrène (D).

3. Corps stratifié en résine selon la revendication 1 ou la revendication 2, dans lequel la résine thermoplastique (B) est un alliage de polymères de la résine méthacrylique (C) et du copolymère de styrène (D).

4. Corps stratifié en résine selon l'une quelconque des revendications 1 à 3, dans lequel la résine à base de polycarbonate (A) comprend une unité structurelle dérivée d'un phénol divalent et une structure terminale dérivée d'un phénol monovalent représenté par la formule générale (1) suivante :

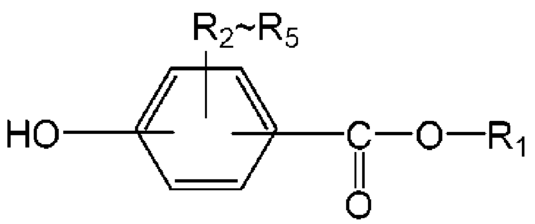 (1)

dans laquelle $R_1$ représente un groupe alkyle en $C_{8-36}$ ou un groupe alcényle en $C_{8-36}$ ; et
$R_2$ à $R_5$ représentent chacun un hydrogène, un halogène, ou un groupe alkyle en $C_{1-20}$ ou aryle en $C_{6-12}$ facultativement substitué où le substituant est un halogène, un groupe alkyle en $C_{1-20}$, ou un groupe aryle en $C_{6-12}$.

**5.** Corps stratifié en résine selon l'une quelconque des revendications 1 à 4, dans lequel la couche contenant une résine thermoplastique (B) présente une épaisseur de entre 10 et 250 μm et le corps stratifié en résine présente une épaisseur globale de entre 0,4 à 4,0 mm.

**6.** Corps stratifié en résine selon l'une quelconque des revendications 1 à 5, dans lequel au moins une de la couche contenant une résine à base de polycarbonate (A), de la couche contenant une résine thermoplastique (B), ou de la couche de revêtement dur comprend un absorbeur d'UV.

**7.** Corps stratifié en résine selon l'une quelconque des revendications 1 à 6, dans lequel une ou les deux surfaces du corps stratifié en résine sont soumises à au moins un d'un traitement anti-empreintes digitales, anti-reflets, anti-éblouissement, résistant aux intempéries, anti-statique, ou anti-salissure.

**8.** Produit thermoformé produit par cintrage à chaud du corps stratifié en résine selon l'une quelconque des revendications 1 à 7.

**9.** Matériau substrat transparent comprenant le corps stratifié en résine selon l'une quelconque des revendications 1 à 7 ou le produit thermoformé selon la revendication 8.

**10.** Matériau protecteur transparent comprenant le corps stratifié en résine selon l'une quelconque des revendications 1 à 7 ou le produit thermoformé selon la revendication 8.

**11.** Plaque protectrice de surface avant de panneau tactile comprenant le corps stratifié en résine selon l'une quelconque des revendications 1 à 7 ou le produit thermoformé selon la revendication 8.

**12.** Plaque avant pour système de navigation automobile, équipement de bureautique, ou dispositif électronique portable, comprenant le corps stratifié en résine selon l'une quelconque des revendications 1 à 7 ou le produit thermoformé selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016042727 A1
- WO 2016060100 A
- JP 2007179018 A


### Non-patent literature cited in the description


- **YUKI-KAGAKU**. Organic Chemistry Handbook, 14-150